# EUROPÄISCHE PATENTSCHRIFT

(11) **EP 2 135 404 B1**
(45) Veröffentlichungstag und Bekanntmachung des Hinweises auf die Patenterteilung: **02.04.2014**
(21) Anmeldenummer: 08736096.2
(22) Anmeldetag: 10.04.2008
(51) Int. Cl.: H04W 40/36, H04L 12/733, H04W 84/18

(54) **VERFAHREN ZUM BETREIBEN EINES NACH ART DES MESH, INSBESONDERE GEMÄSS DEM STANDARD IEEE 802.11S, AUS EINER VIELZAHL VON NETZWERKKNOTEN GEBILDETEN NETZWERKS**
METHOD FOR OPERATING A MESH-TYPE NETWORK, PARTICULARLY AS DEFINED IN AN IEEE 802.11S STANDARD, FORMED BY A PLURALITY OF NETWORK NODES
PROCÉDÉ D'EXPLOITATION D'UN RÉSEAU DE TYPE MAILLÉ, NOTAMMENT SELON LA NORME IEEE 802.11S, CONSTITUÉ D'UNE PLURALITÉ DE NOEUDS DE RÉSEAU

(30) Priorität: 10.04.2007 DE 102007016889
(43) Veröffentlichungstag der Anmeldung: 23.12.2009
(73) Patentinhaber: Unify GmbH & Co. KG, 81379 München (DE)
(72) Erfinder: BAHR, Michael, 81827 München (DE)
(74) Vertreter: Fritzsche, Thomas
(86) Internationale Anmeldenummer: PCT/EP2008/054379
(87) Internationale Veröffentlichungsnummer: WO 2008/122674

(56) Entgegenhaltungen:
- IEEE 802.11 TGS: "Joint SEE-Mesh/Wi-Mesh Proposal to 802.11 TGs"[Online] 27. Februar 2006 (2006-02-27), Seiten 1-108, XP002497826 Gefunden im Internet: URL:http://www.ieee802.org/11/DocFiles/06/ 11-06-0328-00-000s-joint-seemesh-wimesh-pr oposal-to-802-11-tgs.doc> [gefunden am 2008-09-29]

## Beschreibung

Die Erfindung betrifft ein zum Betreiben eines nach Art des Mesh, insbesondere gemäß dem Standard IEEE802.11s, aus einer Vielzahl von Netzwerkknoten gebildeten Netzwerks gemäß dem Gattungsbegriff des Anspruchs 1.

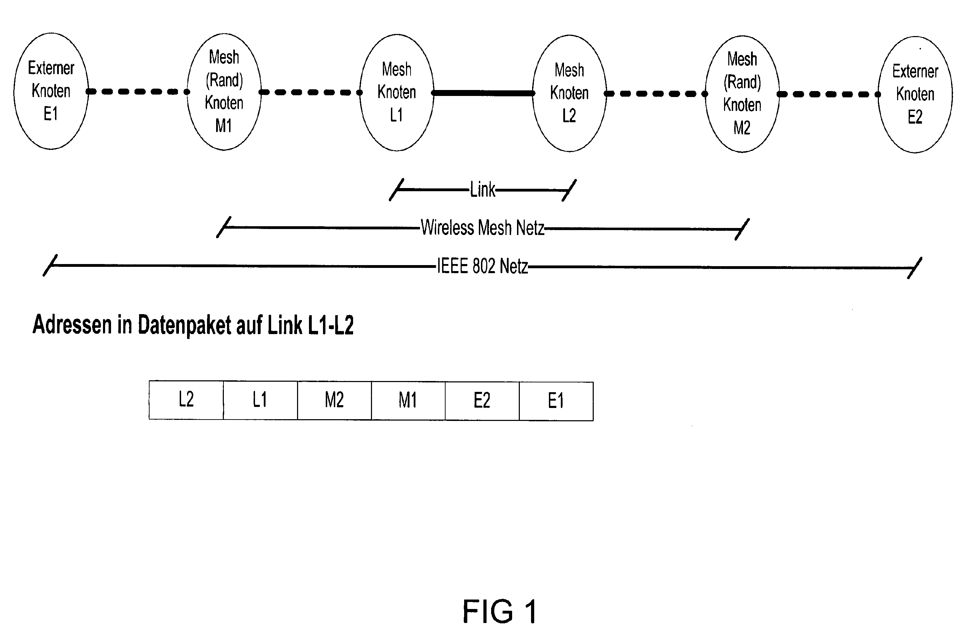

Es ist bekannt, dass der gerade in der Entwicklung befindliche Standard IEEE 802.11s für WLAN-Mesh-Netze (vgl. IEEE P802.11s™/D1.01 Draft STANDARD for Information Technology - Telecommunications and information exchange between systems - Local and metropolitan area networks - Specific Requirements - Part 11: Wireless LAN Medium Access Control (MAC) and Physical Layer (PHY) specifications: Amendment: ESS Mesh Networking) 6 Adressen in den Datenpaketen verwendet. Hierbei werden, wie in der Figur 1 zu erkennen, die 5. und 6. Adresse verwendet, um die MAC Adressen von Quellen- und Senkenknoten zu speichern, die außerhalb des WLAN-Mesh-Netzes sind.

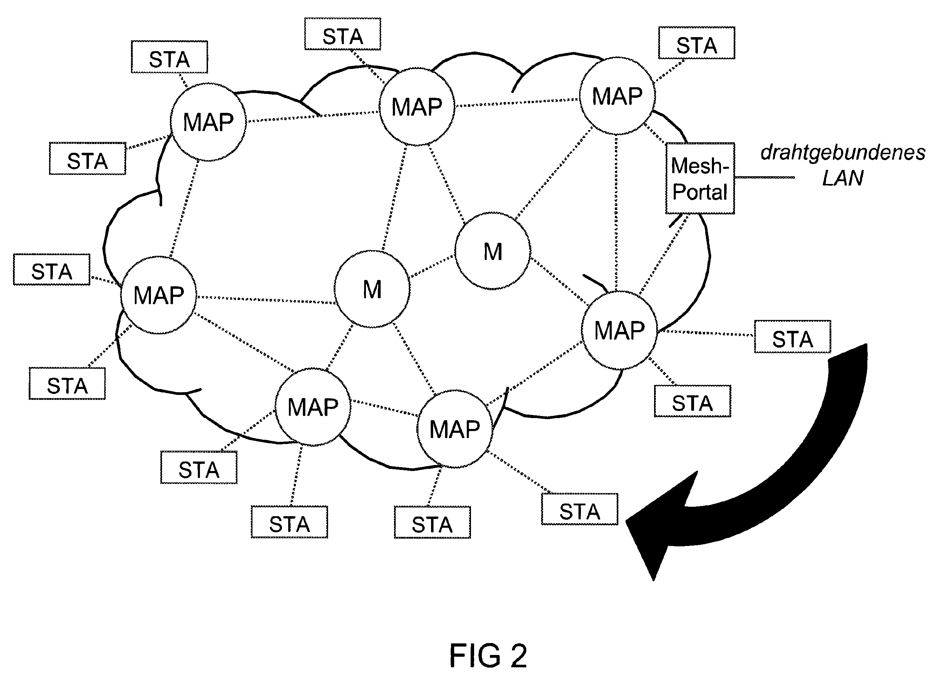

In diesem Zusammenhang wurden Verfahren vorgeschlagen, wie bei einer Pfadberechnung im Standard-Routing-Protokoll von IEEE 802.11s, "Hybrid Wireless Mesh Protocol (HWMP)", die Verbindung zwischen externen Knoten, also Netz-Knoten, die keine Mesh-Knoten und sich deshalb außerhalb des Mesh-Netzes befinden, und den entsprechenden Mesh-Randknoten, an welche diese externen Knoten angrenzen, übermittelt werden kann. Diese Verfahren sind allerdings nur für langlebige Abbildungen (Zuordnungen) zwischen den externen Knoten und den Mesh-Randknoten geeignet. Insbesondere eine Mobilität von Stationen STA, die mit Mesh-Zugangspunkten MAP verbunden sind und von einem Mesh-Zugangspunkt zum nächsten wechseln können, wie es in Figur 2 durch die mobile Station STA an den Mesh-Zugangspunkten MAP angedeutet ist, wird nur unzureichend unterstützt.

Das vorgeschlagene "Radio-aware Optimized Link State Routing (RA-OLSR)"-Protokoll, welches ein optionales, proaktives Routing-Protokoll des IEEE 602.11s-Standards [1, Abschnitt 11A.7] ist, verwendet einen proaktiven Mechanismus, um alle Zuordnungen zwischen Stationen und Mesh-Zugangspunkten allen anderen Mesh-Knoten bekannt zu machen. Jeder Mesh-Zugangspunkt hat eine als so genannte local association base (LAB) bekannte lokale Datenbasis, die alle mit diesem Mesh-Zugangspunkt assoziierten Stationen enthält. Der Inhalt dieser lokalen Datenbasis wird periodisch an alle Knoten im Mesh-Netz mittels so genannter local association base announcement (LABA)-Nachrichten gesendet. Diese speichern die Daten aus den erhaltenen Nachrichten in ihrer so genannten global association base (GAB) globalen Daten und wissen damit, zu welchem Mesh-Zugangspunkt an bestimmte Stationen gerichtete Datenpakete weitergeleitet werden müssen.

Wechselt eine Station von einem Mesh-Zugangspunkt zu einem anderen, so werden spätestens mit der nächsten, periodischen LABA-Nachricht die Änderungen im RA-OLSR-Mesh-Netz bekannt gemacht. Mit Blick auf die Darstellung in Figur 2 heißt das, dass die LABA-Nachricht des alten Mesh-Zugangspunktes der mobilen Station nicht mehr die Adresse der mobilen Station enthält und dass die LABA-Nachricht des neuen Mesh-Zugangspunktes der mobilen Station jetzt die Adresse der mobilen Station enthält.

In IEEE 802.11 TGS: "Joint SEE-Mesh/Wi-Mesh Proposal to 802.11. TGs"[Online] 27. Februar 2006 (2006-02-27), Seiten 1-108, URL:http://www.ieee802.org/11/DocFiles/06/11-06-0328-00-000s-joint-seemesh-wimesh-proposal-to-802-11-tgs.doc> ist ein WLAN-Mesh-Netz gemäß dem Standard IEEE 802.11 beschrieben, bei dem ein Mesh-Zugangspunkt bei einer Dissoziation einer mobilen Station oder bei einem Handoff eine Routing-Fehler-Nachricht an die Mesh-Knoten in der Vorgängerliste versendet.

Zudem wird durch eine Verbindungsunterbrechung, die einen Mesh-Knoten dazu veranlasst sich einen anderen Vorgänger zu suchen, eine Routing-Fehler-Nachricht ausgelöst, die downstream an den Baum, der vor der Einrichtung des neuen Vorgängers bestand, und upstream an den Baum, der nach Einrichtung dies neuen Vorgängers besteht, versendet wird.

Die der Erfindung zugrundeliegende Aufgabe besteht in der Angabe einer gegenüber dem Stand der Technik verbesserten Lösung.

Diese Aufgabe wird ausgehend vom Gattungsbegriff des Anspruchs 1 durch dessen Merkmale gelöst.

Bei dem erfindungsgemäßen Verfahren zum Betreiben eines nach Art des Mesh, insbesondere gemäß dem Standard IEEF802.11s, aus einer Vielzahl von Netzwerkknoten gebildeten Netzwerks, welches zumindest einen ersten als Zugangspunkt für zu dem Netzwerk disjunkte Stationen funktionierenden ersten Netzwerkknoten und zumindest einen zweiten als Anschlusspunkt für zu dem Netzwerk disjunkte Stationen funktionierenden zweiten Netzwerkknoten betreibt, erfolgt bei einem Wechsel einer disjunkten Station von einem Funkversorgungsbereich des ersten Netzwerkknotens zum Funkversorgungsbereich des zweiten Netzwerkknotens in dem Mesh-Netzwerk eine Aktualisierung einer Zuordnungsinformation von Knoten auf Grundlage gemäß einer für das Mesh-Netzwerk gültigen Routing-Protokoll definierten Routing-Fehler-Nachricht. Die Routing-Fehler-Nachricht (RERR) umfasst eine Zuordnung zwischen der disjunkten Station (S1) und dem ersten Netzwerkknoten (M1) sowie eine Information, die eine fehlerhafte Zuordnungsinformation signalisiert.

Ein erfindungswesentlicher Vorteil liegt darin, dass auch für kurzlebige Abbildungen bzw. Zuordnungen von Mesh-Netzwerkexternen zu Mesh-Netzwerk-internen Netzwerknoten, diese zeitnah übermittelt werden können. Somit ist das erfindungsgemäße Verfahren besonders für ein Umfeld geeignet, bei dem sich mobile Mesh-Netzwerk-externe Stationen von einem Anschlusspunkt, also beispielsweise einem Mesh-Randknoten, der als Mesh-Portal Verbindung zu einem anderen Kommunikationsnetz hat oder einem Mesh-Zugangspunkt, der Mesh-externen Stationen eine Kommunikation mit dem Mesh-Netzwerk erlaubt, zum nächsten Anschlusspunkt bewegen können. Ferner ist es für ein Mesh-Netzwerk-Umfeld geeignet, in dem mobile Stationen bei Zugangspunktwechsel keine neue Adresszuordnung erfahren.

Vorzugsweise wird die Erfindung derart weitergebildet, dass einer einem Mesh-Netzwerkknoten zugeordneten Zugangstabelle, die derart strukturiert ist, dass sie in einen ersten Teilbereich und in einen zweiten Teilbereich aufgeteilt ist, wobei der erste Teilbereich für alle Zuordnungen des Mesh-Knotens, dem die Zuordnungstabelle zugeordnet ist, zumindest eine Information enthält und der zweite Teilbereich für ihm bekannte Zuordnungen von anderen Mesh-Knoten des Mesh-Netzwerkes, zumindest eine Information enthält, und der erste und/oder zweite Teilbereich eine, insbesondere als Tabellenspalte strukturierte Zuordnungseigenschaft aufweist, die eine einen Aktivitätsstatus wiedergebende Information enthält.

Eine vorteilhafte Weiterbildung der Erfindung besteht dabei darin, dass die Information, die eine fehlerhafte Zuordnungsinformation signalisiert, als ein so genanntes Flag ausgestaltet wird, das gesetzt ist.

Gemäß einer weiteren. Fortbildung dieses erfindungsgemäßen Ansatzes wird die strukturierte Routing-Fehler-Nachricht lediglich Manipulationen des zweiten Tabellenbereichs zugrunde gelegt wird.

Die strukturierte Routing-Fehler-Nachricht wird von allen Mesh-Knoten, die einen Pfad zu einem in der Routing Fehler-Nachricht angegebenen als Anschlusspunkt funktionierenden Mesh-Knoten haben, mittels Broadcast gesendet, wobei alle Zuordnungsinformationen zu denen der sendende Mesh-Knoten keinen Pfad aufweist, vor dem Broadcast aus der strukturierten Routing-Fehler-Nachricht gelöscht werden.

Alternativ kann die strukturierte Routing-Fehler-Nachricht mittels Unicast von allen Mesh-Knoten zu allen benachbarten Mesh-Knoten gesendet werden.

Eine vorteilhafte Weiterbildung hierzu liegt darin, dass die Aktivitätsstatusinformation der Zuordnungstabelle des Mesh-Netzwerkknotens einen Zustand "aktiv" wiedergibt, wenn beim Mesh-Netzwerkknoten ein Datenpaket ankommt, welches entweder als Quelle oder als Senke einen disjunkten Knoten signalisiert. Hierdurch kann eine zeitnahe Anpassung des Zuordnungsstatus erfolgen.

Eine weitere vorteilhafte Weiterbildung besteht darin, dass die Information der Zuordnungen eine insbesondere als Spalte strukturierte Information über eine erste Gültigkeitsdauer beigefügt wird, wobei bei Setzen der Aktivitätsstatusinformation auf einen Zustand "aktiv" der Wert der ersten Gültigkeitsdauer eingetragen wird und wobei bei Ablauf der ersten Gültigkeitsdauer die Aktivitätsstatusinformation auf einen Zustand "inaktiv"" gesetzt wird. Hierdurch wird eine zeitnahe und Aktualität gewährleistende Anpassung des Zuordnungsstatus erreicht.

In einer weiterbildung der Erfindung wird seitens des verlassenen ersten Netzwerkknotens eine Nachricht derart strukturiert und mittels Broadcast versendet, dass sie alle als "aktiv" gekennzeichneten Zuordnungsinformationen des zweiten Tabellenbereichs des ersten Netzwerkknotens enthält.

Vorteilhaft weitergebildet wird dies dadurch, dass die Anzahl der Weiterleitung der Nachricht zu anderen Knoten, insbesondere durch einen so genannten "Time-to-Live" festgelegt wird, so dass die Nachricht nicht unnötig in dem gesamten, insbesondere großen, Mesh-Netzwerk, verteilt wird, sondern lediglich sichergestellt wird, dass nur betroffene Mesh-Netzwerkknoten verständigt werden.

Bevorzugt wird dabei der Wert der Gültigkeitsdauer derart determiniert, dass er zu einer Gültigkeitsdauer eines Pfades korreliert, zu dem die durchgeführte Aktualisierung hinsichtlich der beteiligten Knoten in Bezug steht, insbesondere erfolgt dabei die Determinierung auf Grundlage von pfadbildenden Protokollnachrichten gemäß dem für das Mesh-Netwerk gültigen Protokoll.

Vorzugsweise wird bei einer weiteren Weiterbildung der Erfindung zumindest die Aktivitätsstatusinformation des ersten Tabellenbereichs aufgrund von gemäß von für die disjunkte Station vorgeschriebenen Zugangsprozeduren ausgelösten Ereignissen aktualisiert. Dies unterstützt die Anbindung disjunkter nicht gemäß Mesh funktionierender Stationen an das Mesh-Netzwerk.

Eine weitere Weiterbildung der Erfindung sieht vor, dass zumindest die Aktivitätsinformation des zweiten Tabellenbereichs aufgrund von für das Mesh-Netzwerk vorgeschriebene Prozeduren, insbesondere Routing-Prozeduren, ausgelöste Ereignisse aktualisiert wird. Hierdurch wird die gewohnte Funktionalität des Mesh-Netzwerks gesichert.

Bei einer weiteren Weiterbildung wird seitens eines eine Information über eine bereits im ersten Tabellenbereich enthaltene Zuordnungsinformation erhaltenden Mesh-Netzwerkknoten, die erhaltene Information verworfen. Hierdurch werden mögliche zeitliche Konstellationsprobleme sowie Adressierungsprobleme aufgefangen.

Bei einer weiteren Fortbildung der Erfindung werden gemäß für das Mesh-Netzwerk gültigem Routing-Protokoll gebildeten Zuordnungsnachrichten derart strukturiert, dass sie gezielt mit Werten, insbesondere einer tatsächlich verbleibenden Gültigkeitsdauer der betreffenden Zuordnungsinformation, für die Determinierung der ersten Gültigkeitsdauer belegt werden können. Hierdurch wird die Aktualisierung von insbesondere im zweiten Tabellenbereich enthaltenen Zuordnungsinformationen unterstützt.

Weitere Einzelheiten und Vorteile der Erfindung werden ausgehend von dem anhand der Figuren 1 bis 2 erläuterten Stand der Technik anhand von in den Figuren 3 bis 9 erläutert. Dabei zeigt
- Figur 1: 6 Adress-Schema nach IEEE 802.11s
- Figur 2: Wireless Mesh-Netz mit mobilen Stationen
- Figur 3: Ausführungsbeispiel eines die Erfindung realisierenden Mesh-Netzwerks
- Figur 4: Route Error Nachricht, erweitert für 6-Adress-Schema
- Figur 5: Zuordnungsnachricht (Zuordnungs-Announcement)
- Figur 6a: Erste Momentaufnahme des Netzwerks bei Verfahrensdurchführung gemäß Ausführungsbeispiels
- Figur 6b: Zugehörige Zuordnungstabellen
- Figur 7a: Zweite Momentaufnahme des Netzwerks bei Verfahrensdurchführung gemäß Ausführungsbeispiels
- Figur 7b: Zugehörige Zuordnungstabellen
- Figur 8a: Dritte Momentaufnahme des Netzwerks nach Abschluss der Verfahrensdurchführung gemäß Ausführungsbeispiels
- Figur 8b: Zugehörige Zuordnungstabellen
- Figur 9a: Momentaufnahme bei einer Variation des Ausführungsbeispiels
- Figur 9b: Zugehörige Zuordnungstabellen

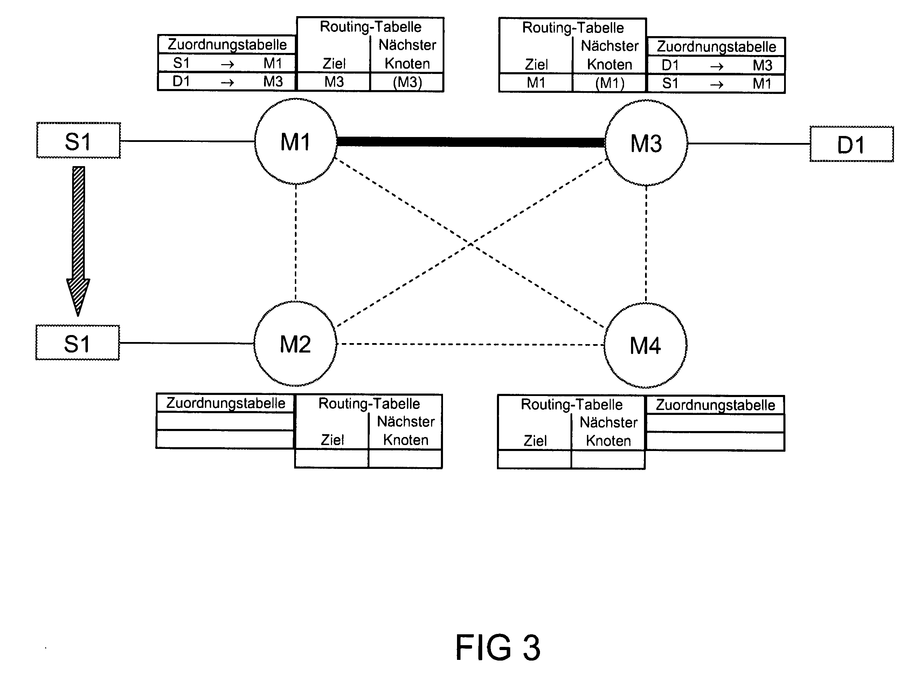

In Figur 3 ist beispielhaft Mesh-Netz dargestellt, das als ein Ausführungsbeispiel der Erfindung die Durchführung des erfindungsgemäßen Verfahren möglich macht und welches weiteren Erläuterungen der Erfindung zugrunde gelegt wird. In diesem Netz sind nur die für die Erläuterung notwendigen Mesh-Randknoten, also ein erster Mesh-Randknoten M1, ein zweiter Mesh-Randknoten M2, ein dritter Mesh-Randknoten M3 sowie ein vierter Mesh-Randknoten M4 dargestellt. Das vorliegende Ausführungsbeispiel kann sogar weitaus mehr Mesh-Knoten enthalten als dargestellt sind. Pfade zwischen zwei dargestellten Mesh-Randknoten können über mehrere Mesh-Knoten gehen. Ebenso sind zur Wahrung der Übersichtlichkeit nur ein externer Quellenknoten S1 und ein externer Senkenknoten D1 als Auszug von der in der Regel Vielzahl von externen Knoten angegeben und dargestellt. Zwischen ihnen und den entsprechenden Mesh-Randknoten M1...4 können sich noch zudem ebenfalls weitere Knoten befinden.

Für das dargestellte Ausführungsbeispiel sei definiert, dass mit "externe Knoten", diejenigen Netz-Knoten bezeichnet sind, die keine Mesh-Knoten und deshalb außerhalb des Mesh-Netzes sind.

Ferner wird mit "Mesh-Randknoten" ein Mesh-Knoten bezeichnet, der neben den Verbindungen zu anderen Mesh-Knoten auch eine Verbindung zu Knoten hat, die nicht zum Mesh-Netz gehören.

Das können im Kontext des IEEE 802.11s "Mesh-Zugangspunkte" sein, mit denen sich normale WLAN-Stationen (Nutzerknoten) verbinden können, um über das Mesh-Netz zu kommunizieren, oder so genannte "Mesh-Portale" sein, die eine Verbindung zu anderen Netzen, wie zum Beispiel einem drahtgebundenen Ethernet, haben.

Ein Mesh-Randknoten, über den ein externer Quellenknoten mit dem Mesh-Netz verbunden ist, wird auch als Mesh-Quellenknoten bezeichnet. Ein Mesh-Randknoten, über den ein externer Senkenknoten mit dem Mesh-Netz verbunden ist, wird auch als Mesh-Senkenknoten bezeichnet.

Konzeptionell können Mesh-Zugangspunkte und Mesh-Portale gemäß der Erfindung und somit dem vorliegenden Ausführungsbeispiel gleich behandelt werden. Allerdings unterscheiden sie sich in der Art und Weise, wie sie die Informationen über Knoten außerhalb des Mesh-Netzes, die über sie erreicht werden können, erhalten. Auch die Topologie und die mögliche Anzahl von über sie erreichbaren externen Knoten können unterschiedlich sein.

Im Kontext des Ausführungsbeispiels sind "Zuordnungstabellen" derart definiert, dass sie die Zuordnungen zwischen Mesh-Randknoten und externen Knoten enthalten. Ein Eintrag in der Zuordnungstabelle beschreibt, über welchen Mesh-Randknoten der angegebene externe Knoten aus dem Mesh-Netz heraus erreicht werden kann. Dabei kann die Zuordnungstabelle gemäß dem Ausführungsbeispiel zum Einen in einen "lokalen Teil der Zuordnungstabelle", welcher alle Zuordnungen dieses Mesh-Knotens enthält, wobei der Mesh-Knoten über ein externes Interface, ein so genanntes "non-mesh Interface", den externen Knoten erreichen kann und nur Mesh-Randknoten einen lokalen Teil aufweisen, und zum Anderen einen "globalen Teil der Zuordnungstabelle" aufgeteilt werden, der alle bekannten Zuordnungen anderer Mesh-Knoten enthält, wobei der betreffende Mesh-Knoten über den angegebenen Mesh-Randknoten den externen Knoten erreichen kann und jeder Mesh-Knoten einen globalen Teil haben kann.

Ferner können lokaler und globaler Teil der Zuordnungstabelle als zwei separate Tabellen oder auch als eine gemeinsame Tabelle implementiert werden. Dabei gilt, dass jeder Mesh-Knoten eine Zuordnungstabelle hat.

Der Tabellenindex der Zuordnungstabelle ist der externe Knoten: Mesh-Knoten suchen den passenden Mesh-Randknoten für einen gegebenen externen Knoten.

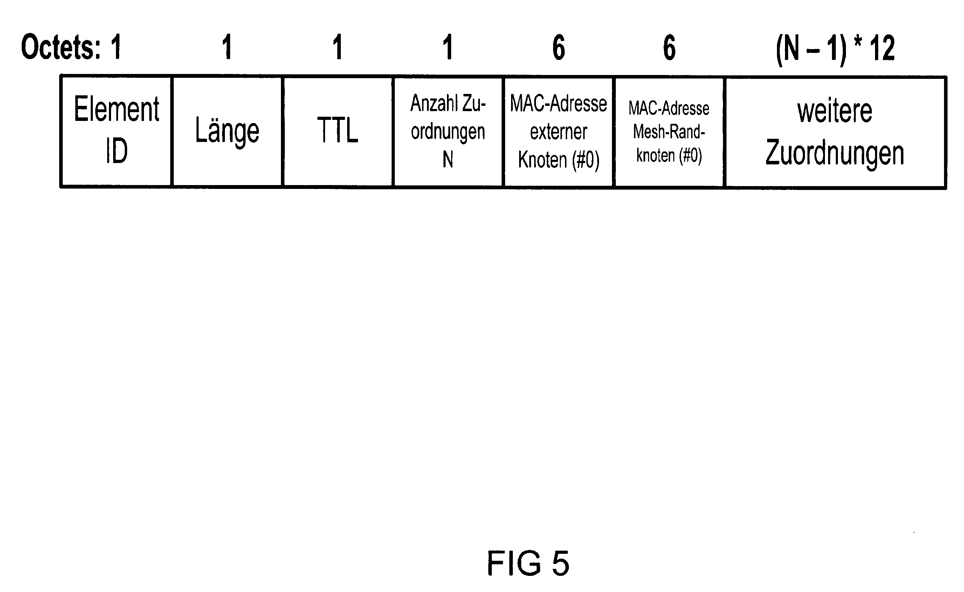

Für das Ausführungsbeispiel sei ferner definiert, dass "Zuordnungsnachrichten" Nachrichten sind mit denen Zuordnungen anderen Mesh-Knoten im Mesh-Netz bekannt gemacht werden. Ein Ausführungsbeispiel des Aufbaus und weitere Details zu solchen Nachrichten ist in Figur 5 beschrieben.

Als externer Quellenknoten S1, der gemäß Darstellung über den ersten Mesh-Randknoten M1 Datenpakete in das Mesh-Netz senden kann, kann als eine gemäß dem Wireless Local Area Network zugrundeliegenden Standard IEEE 802.11 oder seinen Derivaten ausgestaltete Station sein, während der erste Mesh-Randknoten M1 als ein Mesh-Zugangspunkt fungieren kann.

Der externe Senkenknoten D1, kann gemäß Darstellung der über einen dritten Mesh-Randknoten M3 Datenpakete aus dem Mesh-Netz erhalten kann. In einem realen Mesh-Netz kann D1 z.B. ein Knoten in einem drahtgebundenen Ethernet und M3 ein Mesh-Portal sein.

In dem in Figur 3 dargestellten Mesh-Netz existiert genau ein Pfad, und zwar zwischen dem ersten Mesh-Randknoten M1 und dem dritten Randknoten M3. Dieser Pfad wurde für die Kommunikation zwischen dem externen Quellen-Knoten S1 und dem externen Senken-Knoten D1 aufgebaut. In Figur 3 sind des Weiteren Routing-Tabellen und Zuordnungstabellen angegeben, die sich in dem Beispiel gemäß den Annahmen ergeben bzw. angenommen werden.

Beim Wechsel eines externen Knotens S1, D1 zu einem anderen Mesh-Randknoten M1...M4 muss berücksichtigt werden, dass die Kommunikation oft bidirektional ist. Das heißt entsprechend dem Beispiel in Figur 3, dass der Quellen-Knoten S1 für die (unidirektionale) vom Quellen-Knoten S1 zum Senken-Knoten D1 gerichtete Kommunikation funktional der Quellenknoten und der Senken-Knoten D1 funktional der Senkenknoten ist, und für die (unidirektionale) vom Senken-Knoten D1 zum Quellen-Knoten S1 gerichtete Kommunikation der Quellen-Knoten S1 funktional der Senkenknoten ist und der Senken-Knoten D1 funktional als Quellenknoten gilt.

Der Aufbau der Zuordnungstabellen gemäß des in Figur 3 gezeigten Ausführungsbeispiels sowie Definitionen hierzu sollen im Folgenden näher erläutert werden.

Gemäß dem Ausführungsbeispiel gilt, dass die Mindestanforderung an die Zuordnungstabelle bezüglich der vorhandenen Spalten die folgenden Informationstypen als Spalten vorgesehen sind:
- Adresse externer Knoten (Schlüsselspalte)
- Adresse dazugehöriger Mesh-Randknoten
- Timeout / verbleibende Gültigkeitszeit der Zuordnung

Ferner wird erfindungsgemäß die Zuordnungstabelle um die folgende Spalte erweitert:
- Informationstyp "inaktiv/aktiv", mit den beiden Werten
   o inaktiv: Die Zuordnung wird zur Zeit nicht für die Weiterleitung von Datenpaketen verwendet. Es kann sein, dass kein Pfad zu dem entsprechenden Mesh-Randknoten M1...M4 vorhanden ist.
   o aktiv: Die Zuordnung wird momentan für die Weiterleitung von Datenpaketen verwendet. Es existiert ein Pfad zu dem entsprechenden Mesh-Randknoten M1...M4.

Kommt ein Datenpaket für einen oder von einem externen Knoten beim Mesh-Randknoten M1...M4 an, so werden die Spalte "inaktiv/aktiv" des entsprechenden Eintrags in der Zuordnungstabelle mit einem die Information "aktiv" wiedergebenden, insbesondere codierten Wert, besetzt und der Timeout auf seinen Startwert gesetzt. Läuft der Timer ab, d.h. es wurde für eine bestimmte Zeit kein Paket vom Mesh-Randknoten an den entsprechenden externen Knoten weitergeleitet bzw. von ihm empfangen, wird die Spalte "inaktiv/aktiv" mit einem die Information "inaktiv" wiedergebenden, insbesondere codierten Wert, besetzt.

Da die Zuordnungen eigentlich Teile des Pfades sind, sollte der Startwert des Timers einer Zuordnung dem Timeout des dazugehörigen Pfades im Mesh-Netz entsprechen. Deshalb wird in der Erfindung der Startwert des Timers aus den entsprechenden Routing-Nachrichten übernommen, in der Regel gemäß IEEE 802.11s definierte RREQ-, RREP-Nachricht, bzw. für den Startwert derselbe Wert wie für den ermittelten Mesh-Pfad verwendet.

Die Initialisierung der Spalte "inaktiv/aktiv" bei einem neuen Eintrag in der Zuordnungstabelle erfolgt gemäß dem Ausführungsbeispiel für lokalen und im globalen Teil unterschiedlich.

Im lokalen Teil werden die Einträge über externe Verfahren gesetzt und gelöscht, zum Beispiel bei der gemäß IEEE 802.11 definierten Assoziation und Dissoziation einer IEEE 802.11 Station, also einem externen Knoten, mit einem Mesh-Zugangspunkt. Ein Mesh-Pfad zu diesem externen Knoten wird dadurch aber nicht aufgebaut. Deshalb wird die Spalte inaktiv/aktiv gemäß der Erfindung mit inaktiv initialisiert.

Im globalen Teil werden die Einträge durch Routing-Nachrichten aus dem Mesh-Netz gesetzt. Es gibt also zu einem neuen Eintrag einen entsprechenden Mesh-Pfad. Deshalb wird erfindungsgemäß die Spalte inaktiv/aktiv mit aktiv initialisiert. Auch der Mesh-Pfad ist auf aktiv gesetzt, so dass die entsprechende Zuordnung auch aktiv sein muss. Gleichzeitig wird auch der Timer der Zuordnung gestartet.

Nur im globalen Teil der Zuordnungstabelle kann eine inaktive Zuordnung auch durch den Mesh-Knoten selbst gelöscht werden, z.B. um die Zuordnungstabelle möglichst klein zu halten. Im lokalen Teil der Zuordnungstabelle werden Zuordnungen durch externe Verfahren gelöscht, z.B. die Dissoziation einer Station von einem Mesh-Zugangspunkt.

In Routing-Protokollen wie dem HWMP wird die zeitliche Reihenfolge der Routing-Nachrichten in der Regel über Sequenznummern sichergestellt. Diese Sequenznummern hängen mit dem Originator der Routing-Nachrichten zusammen und stellen sicher, dass alte Routing-Nachrichten mit veralteter Information nicht die aktuelle Information überschreiben können. Die entsprechenden Originatoren von Zuordnungen sind die externen Knoten. Externe Knoten können nicht erweitert werden und können deshalb auch keine Sequenznummern an die Zuordnungen binden.

Eine erfindungsgemäße Verfahrensvariante besteht darin, dass die entsprechenden Mesh-Randknoten M1...M4 eine Sequenznummer an die Zuordnungen binden. Dann ist es aber gemäß der Erfindungsvariante notwendig, dass bei einem Wechsel des externen Knotens S1, D1 von einem Mesh-Randknoten M1..M4 zu einem anderen auch die Sequenznummer mit transferiert wird, damit die zeitliche Kontinuität eingehalten werden kann. Dies stellt zwar die Funktion gemäß dem Ausführungsbeispiel sicher, ist aber nur mit großem Protokollaufwand möglich.

Eine Weiterbildung der Erfindung bietet eine einfachere Lösung durch das Befolgen bestimmter erfindungsgemäßer Regeln bei der Aktualisierung der Zuordnungstabellen. Damit können die meisten Konflikte bei der zeitlichen Reihenfolge vermieden werden. Sollte im seltenen Fall doch tatsächlich ein Konflikt auftreten, wird es zwar zu kurzzeitigen Störungen im Mesh-Netz kommen, die aber durch das Routing-Protokoll wieder behoben werden.

Erfindungsgemäß sollen hierzu zumindest Teile der folgenden Regeln bei der Aktualisierung der Zuordnungstabellen beachtet werden:
- Einträge im lokalen Teil der Zuordnungstabelle werden nur über externe Verfahren gesetzt und gelöscht, zum Beispiel bei der Assoziation und Dissoziation einer IEEE 802.11 Station mit einem Mesh-Zugangspunkt. Nur diese externen Verfahren dürfen Zuordnungen im lokalen Teil aktualisieren.
- Wenn ein Mesh-Randknoten eine Routing-Nachricht oder eine Zuordnungsnachricht erhält, die eine Zuordnung enthält, für deren externen Knoten bereits eine Zuordnung im lokalen Teil der Zuordnungstabelle des Mesh-Randknotens existiert, wird diese Zuordnung nicht übernommen und die vorhandene Zuordnung im lokalen Teil der Zuordnungstabelle nicht aktualisiert. Dieser Fall kann aufgrund zeitlichen Konstellationen beim Wechsel einer Station auftreten. Er kann aber auch Indikator für Konfigurationsprobleme im Netz sein, wie sie zum Beispiel bei doppelten MAC-Adressen auftreten.
- Zuordnungen aus Routing-Nachrichten, z.B. aus RREQ-Nachrichten mit 6-Adress-Unterstützung, werden in den globalen Teil der Zuordnungstabelle eingetragen. Sollte bereits ein Eintrag für den externen Knoten der neuen Zuordnung existieren, so wird er aktualisiert.
- Zuordnungsnachrichten werden nur als nützliche Information betrachtet. Die in einer Zuordnungsnachricht enthaltenen Zuordnungen sind eventuell schon recht lange nicht aktualisiert worden. Deshalb wird eine Zuordnung aus einer Zuordnungsnachricht nur dann übernommen, wenn sich für denselben externen Knoten keine Zuordnung im lokalen Teil und keine aktive Zuordnung im globalen Teil der Zuordnungstabelle des Empfängers der Zuordnungsnachricht befindet. Dabei gilt ferner, dass Zuordnungen aus Zuordnungsnachrichten
   o keine existierenden Zuordnungen im lokalen Teil der Zuordnungstabelle aktualisieren können
   o keine existierenden aktiven Zuordnungen im globalen Teil der Zuordnungstabelle aktualisieren können
   o inaktive Zuordnungen im globalen Teil der Zuordnungstabelle aktualisieren, da eine inaktive Zuordnung in der Regel älter als eine aktive (aus der Zuordnungsnachricht) ist. Außerdem können inaktive Zuordnungen im globalen Teil der Zuordnungstabelle auch gelöscht werden. Sind sie noch vorhanden, dann nur als zusätzliche, geschichtliche und eventuell noch gültige Information, die durch neuere überschrieben werden kann.
- Um auch existierende aktive Zuordnungen im globalen Teil der Zuordnungstabellen durch Zuordnungsnachrichten aktualisieren zu können, kann in einer weiteren vorteilhaften Ausgestaltung der Zuordnungsnachricht auch die verbleibende Gültigkeitszeit der Zuordnungen mit in den Zuordnungsnachrichten übermittelt werden. Durch z.B. einen einfachen Vergleich kann entschieden werden, welche Zuordnung die längere Gültigkeit hat. Diese Zuordnung wird dann in dem Mesh-Knoten für den entsprechenden externen Knoten verwendet.

Unter den beschriebenen Vorgaben und Definitionen ergibt sich dann für den Fall, dass ein externer Knoten S1, D1 den Mesh-Randknoten wechselt soll nun im Folgenden die vorteilhafte erfindungsgemäße Verfahrensweise erläuert.

Für die Beschreibung der erfindungsgemäßen Verfahrensweise wird dabei angenommen, dass der Quellenknoten S1 in Figur 3 vom ersten Mesh-Randknoten M1 zum zweiten Mesh-Randknoten M2 wechselt. Die Zuordnung zwischen dem Quell-Knoten S1 und dem ersten Mesh-Randknoten M1 ist aktiv.

Wenn die aktive Zuordnung zwischen dem Quell-Knoten (Station) S1 und dem ersten Mesh-Knoten M1 aus dem lokalen Teil der Zuordnungstabelle durch einen externen Vorgang, wie zum Beispiel eine Dissoziation der Station S1 von dem ersten Mesh-Zugangspunkt M1, gelöscht wird, schickt der verlassene erste Mesh-Randknoten M1 eine Route Error (RERR)-Nachricht per Broadcast an das gesamte Netz, die diese gelöschte Zuordnung enthält. Ein RERR kann verwendet werden, da ja die Zuordnung ein Stück des Pfades zwischen dem externen Quellenknoten S1 und dem externen Senkenknoten D1 war. Die RERR-Nachricht ist gegenüber der Standard-RERR-Nachricht aus HWMP dahingehend erweitert, dass sie nicht nur den Mesh-Randknoten, sondern die gesamte Zuordnung enthält und damit in vorteilhafter Weise für das in IEEE 802.11s verwendete 6-Adressen-Schema verwendbar ist.

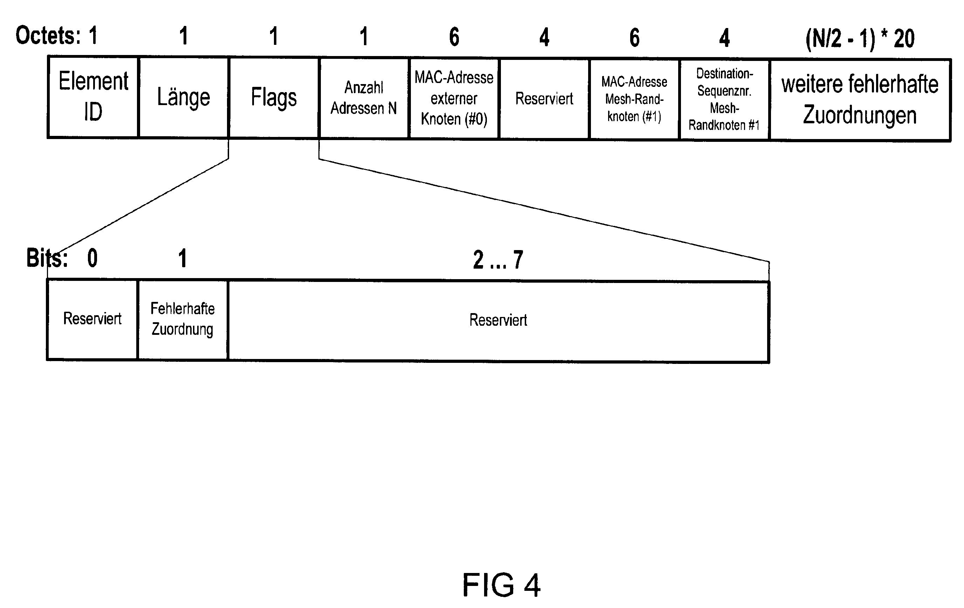

In Figur 4 ist diese erfindungsgemäß erweiterte RERR-Nachricht gezeigt. Zu erkennen ist, dass ein neues Flag "Fehlerhafte Zuordnung" eingeführt ist, welches anzeigt, dass es sich um ein RERR für eine Zuordnung handelt, wenn es gesetzt ist. Ein neues Feld "Anzahl Adressen N" enthält die Anzahl der nachfolgenden Tupel MAC-Adresse / Destination-Sequenznummer. Da eine Zuordnung aus zwei MAC-Adressen besteht, ist N immer gerade. Externe Knoten haben keine Sequenznummer, da sie nicht Teil des Mesh-Netzes sind. Um die Verarbeitung der RERR-Nachricht in den Mesh-Knoten zu erleichtern, ist ein entsprechendes Feld zwar vorhanden, es wird aber nicht ausgewertet (Eintrag Reserviert).

Bei Bedarf kann dieses Feld also auch weggelassen werden.

Auch die Verarbeitung eines erfindungsgemäß erweiterten RERRs mit gesetztem Flag "Fehlerhafte Zuordnung" unterscheidet sich von der Verarbeitung der bisherigen HWMP-RERR-Nachricht. Die erweiterte RERR-Nachricht darf nur auf den globalen Teil der Zuordnungstabelle angewendet werden. Nur die Zuordnungen, die mit den beiden Adressen - also von Mesh-Randknoten und externem Knoten - übereinstimmen, werden in der Zuordnungstabelle gelöscht. Einträge in der Routing-Tabelle werden nicht gelöscht.

Die erweiterte RERR-Nachricht wird von allen Mesh-Knoten per Broadcast erneut gesendet, die einen Pfad zu einem der im RERR angeführten Mesh-Randknoten haben. Sind im RERR mehrere Zuordnungen enthalten, werden alle Zuordnungen vor dem erneuten Broadcast aus dem RERR gelöscht, zu denen der Mesh-Knoten keinen Pfad hat. Alternativ kann die RERR-Nachricht per unicast an alle benachbarten Knoten geschickt werden, wenn sie zum Beispiel durch eine Liste der Nachbarn bekannt sind. Falls das Routing-Protokoll Vorgängerlisten verwaltet (so genannte precursor lists), kann die RERR-Nachricht auch per Unicast nur an die Vorgänger-Mesh-Knoten des Pfades zu dem im RERR angeführten Mesh-Randknoten geschickt werden.

Nachdem sich der externe Quellenknoten S1 (Station) gemäß dem in Figur 3 erwähnten Szenario zum zweiten Mesh-Randknoten M2 als neuem Mesh-Knoten bewegt hat, diese Zuordnung, zum Beispiel über die Assoziation einer Station (S1) mit dem zweiten Mesh-Zugangspunkt (M2), in die Zuordnungstabelle des zweiten Mesh-Knotens M2 eingetragen wurde, können die im Folgenden skizzierten verschiedenen Fälle auftreten, wenn der vom Quellenknoten S1 als neuer Zugang genutzter zweiter Mesh-Zugangspunkt M2 Datenpakete vom externen Quellenknoten S1 an den externen Senkenknoten D1 weiterleiten soll:
a) Der zweite Mesh-Randknoten M2 hat einen Eintrag für den Senkenknoten D1 in seiner Zuordnungstabelle und einen Pfad zum dazugehörigen dritten Mesh-Randknoten M3
b) Der zweite Mesh-Randknoten M2 hat zwar einen Pfad zum dritten Mesh-(Rand)Knoten M3, über den Datenpakete zum externen Senkenknoten D1 geschickt werden müssen, aber keinen Eintrag für den externen Senkenknoten D1 in seiner Zuordnungstabelle.
c) Der zweite Mesh-Randknoten M2 hat weder einen Eintrag für den externen Senkenknoten D1 in seiner Zuordnungstabelle noch einen Pfad zum entsprechenden dritten Mesh-Randknoten M3
d) Der zweite Mesh-Randknoten M2 hat einen Eintrag für den Senkenknoten D1 in seiner Zuordnungstabelle und keinen Pfad zum dazugehörigen dritten Mesh-Randknoten M3

Die erfindungsgemäße Verfahrensweise bietet speziell für die Fälle b), c) und d) eine vorteilhafte Lösung.

Im Fall a) kann die Kommunikation zwischen dem Quellenknoten S1 zum Senkenknoten D1 sofort weitergehen, da alle notwendigen Einträge in Zuordnungs- und Routing-Tabelle vorhanden sind. Es braucht also keine spezielle Lösung entwickelt werden.

In den Fällen b), c) und d) ist die einfachste Lösung, dass der zweite Mesh-Randknoten M2 eine Route Request-Nachricht (RREQ) mit der gesuchten Zieladresse des Senkenknotens D1 sendet, wenn er vom externen Quellenknoten S1 Datenpakete für den externen Senkenknoten D1 zum Weiterleiten bekommt. Als Quelladressen im RREQ sind für den Mesh-Quellknoten der zweite Mesh-Randknoten M2 und für den externen Quellknoten S1 eingetragen. Das Destination-Only-Flag (DO-Flag) ist gesetzt, so dass nur der entsprechende Mesh-Randknoten ein RREP erzeugen kann. Beim Erhalt dieser RREQ-Nachricht lernt der dritte Mesh-Randknoten M3 die neue Zuordnung für den Quellenknoten S1 kennen und trägt sie in seine Zuordnungstabelle ein. Er generiert auch eine Route Reply-Nachricht (RREP), die er an den zweiten Mesh-Randknoten M2, dem Mesh-Quellknoten auf dem Pfad zwischen den beiden externen Knoten S1, D1, schickt. In dieser RREP-Nachricht sind als Senkenadressen für den Mesh-Senkenknoten der dritte Mesh-Randknoten M3 und für den externen Senkenknoten D1 eingetragen. Beim Erhalt dieser RREP-Nachricht lernt der zweite Mesh-Randknoten M2 die neue Zuordnung und auch gleich den Pfad zum entsprechenden Mesh-Randknoten für den Senkenknoten D1 kennen und die Kommunikation zwischen den externen Knoten S1, D1 kann weitergehen.

Im Fall d) kann auch alternativ eine Route zum entsprechenden Mesh-Randknoten also dem dritten Mesh-Randknoten M3 mittels des RREQs aufgebaut werden: gesuchter Mesh-interner Senkenknoten ist der dritte Mesh-Randknoten M3, Mesh-Quellknoten ist der zweite Mesh-Randknoten M2, externer Quellknoten ist der externe Knoten S1. Dann ist es aber wichtig, dass bei vorhandener Zuordnung für den externen Senkenknoten und fehlendem Pfad zum entsprechenden Mesh-Randknoten auch tatsächlich das Route Request initiiert wird und es nicht als Fehlersituation gilt. Bei letzterem müsste dann das Route Request für den externen Senkenknoten D1 initiiert werden.

In einer weiteren vorteilhaften Ausgestaltung der Erfindung wird in dem RREQ das Destination-Only-Flag (DO-Flag) nicht gesetzt, so dass auch Zwischenknoten bereits mit einem RREP antworten können. Das würde die Wartezeit auf einen Pfad zum Senkenknoten D1 verkürzen, insbesondere da der alte als Zugang genutzte erste Mesh-Randknoten M1, der eine aktive Zuordnung zwischen dem Senkenknoten D1 und dem dritten Mesh-Knoten M3 besitzt, sich im Falle einer mobilen Station in der Nähe des als neuen Zugang genutzten zweiten Mesh-Randknotens M2 befindet. Das Reply-and-Forward-Flag muss gesetzt werden, damit das RREQ bis zum entsprechenden Mesh-Randpunkt per Broadcast weitergeleitet wird und er die neue Zuordnung des Quellenknotens S1 kennen lernt. Für dieses Verfahren müssen die HWMP-Bearbeitungsregeln für RREQs mit nicht gesetztem DO-Flag wie folgt erweitert werden:
Hat ein Zwischenknoten einen aktiven Eintrag in der Zuordnungstabelle für den gesuchten Knoten des RREQs, so antwortet er mit einem RREP für den gesuchten Knoten. Für die Senkenadressen werden die entsprechenden Werte aus der Zuordnungstabelle genommen (Mesh- und externer Senkenknoten).

Da der als neuer Zugang genutzte zweite Mesh-Randknoten M2 eines externen Knotens S1 oft nicht weit vom alten Zugang, dem ersten Mesh-Randknoten M1, entfernt ist, kann damit sehr schnell ein Pfad zwischen den externen Knoten S1 und D1 aufgebaut werden. Dieser Pfad verläuft über den alten Mesh-Randknoten. Die RREQ/RREP-Nachrichten werden nach einer gewissen Zeit den besten Pfad gefunden haben, der dann auch benutzt wird.

In einer weiteren vorteilhaften Ausgestaltung der Erfindung schickt der zuvor als Zugang genutzte erste Mesh-Randknoten M1 per Broadcast eine spezielle Zuordnungsnachricht wie sie in Figur 5 dargestellt ist, die alle aktiven Zuordnungen aus dem globalen Teil seiner Zuordnungstabelle enthält, wenn eine aktive Zuordnung aus dem lokalen Teil der Zuordnungstabelle durch einen externen Vorgang, wie zum Beispiel eine Dissoziation einer Station von einem Mesh-Zugangspunkt, gelöscht wird. Um diese Zuordnungsnachricht nicht im gesamten Wireless Mesh-Netz verteilen zu müssen, kann ihre Ausbreitung über das Setzen eines entsprechenden Time-to-live-(TTL)-Wertes eingeschränkt werden. Der TTL-Wert legt die Anzahl der Weiterleitungen der Zuordnungsnachricht fest. Idealerweise sollte der initiale TTL-Wert so groß sein, dass der wahrscheinliche neue Zugangspunkt, der zweite Mesh-Randpunkt M2, über den der externe Knoten S1 jetzt erreicht werden kann, von der Zuordnungsnachricht auch erreicht wird. In der Regel kann dieser Wert kleiner sein als der Netzdurchmesser. Knoten tragen die Zuordnungen aus der Zuordnungsnachricht entsprechend der weiter oben dargelegten Regeln in ihre Zuordnungstabelle ein. Der neue Mesh-Randknoten, der zweite Mesh-Knoten M2, lernt dadurch die Zuordnung vom Senkenknoten D1 zum dritten Mesh-Knoten M3 kennen, und kann sofort Daten an den dritten Mesh-Knoten M3 weiterleiten, wenn er bereits einen Pfad zum dritten Mesh-Randknoten M3 hat (s.o. Fall b)). Es muss auch kein RREQ/RREP gesendet werden wie oben für den allgemeinen Fall beschrieben. Für die oben genannten Fälle c) und d) bringt die Zuordnungsnachricht keinen Vorteil, da dann immer noch ein Pfad zum dritten Mesh-Randknoten M3 gesucht werden müsste. In diesem Fall sollte das RREQ aber gleich nach dem externen Senkenknoten D1 suchen.

Für eine kurze Zeitdauer kann es vorkommen, dass der alte Mesh-Randknoten M1 Datenpakete empfängt, die ihn als Mesh-Senkenknoten enthalten und für den externen Knoten S1 bestimmt sind (externer Senkenknoten). Diese kann er nicht über sein externes Interface an den externen Senkenknoten S1 weiterleiten. Allerdings kann der erste Mesh-Randknoten M1 aufgrund der oben beschriebenen Mechanismen eine Zuordnung vom Senkenknoten S1 zum zweiten Mesh-Knoten M2 und einen Mesh-Pfad zum Senkenknoten S1 über den als neuen Zugang genutzten zweiten Mesh-Randknoten M2 haben. In diesem Fall schickt der erste Mesh-Randknoten M1 die Datenpakete zurück in das Mesh-Netz und dann über die neue Zuordnung (S1-M2) an den externen Senkenknoten S1.

Falls der zuvor als Zugang genutzte erste Mesh-Randknoten M1 keinen Pfad durch das Mesh-Netz zum externen Senkenknoten S1 hat, stehen die folgenden Möglichkeiten zur Wahl:
- Aufbau eines Mesh-Pfades zum externen Senkenknoten S1: Dazu wird ein Route Request mit dem externen Knoten S1 als gesuchten Senkenknoten und dem ersten Mesh-Randknoten M1 als Mesh-Quellknoten initiiert. Dadurch wird ein Pfad vom ersten Mesh-Randknoten M1 zum Senkenknoten S1 aufgebaut, über den dann die noch fälschlicherweise an den ersten Mesh-Knoten M1 als Mesh-Senkenknoten geschickten Pakete an den als externen Senkenknoten fungierenden S1 weitergeleitet werden können. Falls die Information vorhanden ist, zum Beispiel aus der Adressenzuordnung in den Datenpaketen, kann als externer Quellenknoten im Route Request der externe Quellenknoten D1 eingetragen werden. Dadurch kann der neue Zugangspunkt, der zweite Mesh-Randpunkt M2, die Zuordnung zwischen dem dritten Mesh-Randpunkt M3 und dem externen Quellenknoten D1 lernen.
- Puffern der Pakete, bis eventuell durch den neuen Mesh-Randknoten des externen Knotens S1 ein Pfad zum externen Senkenknoten S1 aufgebaut wird. Dann können die gepufferten Datenpakete an den externen Senkenknoten S1 weitergeleitet werden. Wird kein Pfad zum externen Senkenknoten S1 aufgebaut, kann der erste Mesh-Randknoten M1 entweder selber einen Pfad aufbauen (siehe vorherigen Punkt) oder die Datenpakete verwerfen. Im letzteren Fall sollte eventuell der Quellenknoten benachrichtigt werden.

Der zuvor als Zugang genutzte erste Mesh-Randknoten M1 wird keine Datenpakete für den externen Senkenknoten S1 mehr erhalten, sobald die für Zuordnungen modifizierte Route-Error-Nachricht beim dritten Mesh-Randknoten M3 angekommen ist und die Zuordnung zwischen dem externen Senkenknote S1 und dem ersten Mesh-Randknoten M1 im dritten Mesh-Randknoten M3 gelöscht wurde.

Nach Erhalt der für Zuordnungen modifizierten RERR-Nachricht weiß der dritte Mesh-Randknoten M3 nicht mehr, über welchen Mesh-Randknoten er den externen Senkenknoten S1 erreichen kann, da die entsprechende Zuordnung für den externen Senkenknoten S1 gelöscht wurde.

Die Standardlösung für dieses Problem ist, dass der dritte Mesh-Randknoten M3 ein Route-Request für den externen Senkenknoten S1 initiiert, wenn er Datenpakete für den externen Senkenknoten S1 erhält. Das ist das Standard-HWMP-Verhalten. Dadurch wird der aktuelle, beste Pfad zu dem externen Senkenknoten S1 gefunden und gleichzeitig alle betroffenen Zuordnungen aktualisiert.

Gemäß einer weiteren erfindungsgemäßen Verbesserung sollte der dritte Mesh-Randknoten M3 das Destination-Only-Flag im Route Request für den externen Senkenknoten S1 setzen, damit nur der entsprechende als neuer Zugang genutzte zweite Mesh-Randknoten M2 mit der neuen, korrekten Zuordnung antwortet. Dies verhindert die Antwort von Mesh-Knoten mit der alten, falschen Zuordnung, falls sie die modifizierte RERR-Nachricht (noch) nicht erhalten haben. Solch eine Antwort wäre möglich, wenn das Destination-Only-Flag im RREQ nicht gesetzt ist. Eine technische Realisierung, die auch die weiter oben beschriebene nützliche Antwort von Zwischenknoten auf ein vom neuen Mesh-Randknoten initiiertes RREQ ermöglicht, ist, dass sich der Mesh-Randknoten für eine gewisse zeit merkt, ob eine Zuordnung für einen externen Knoten durch eine wie in der Erfindung beschriebene modifizierte RERR-Nachricht gelöscht wurde. Ist das der Fall, muss das Destination-Only-Flag in einem Route Request für diesen externen Knoten gesetzt werden.

Die vorausgehend beschriebene erfindungsgemäße Verfahrensweise ist anhand eines, ein reaktives Routing-Protokoll wie HWMP nutzendes Szenario beschrieben. Auch die Mechanismen der Erfindung folgen dem reaktiven Prinzip - sie werden nur dann ausgeführt, wenn Bedarf dafür besteht. Die Mechanismen der Erfindung können auch proaktiv ausgeführt werden, das heißt, auch wenn nicht unbedingt Bedarf besteht. Eine proaktive Variante der Erfindung ist dann gegeben, wenn die Mechanismen der Erfindung auch bei inaktiven Zuordnungen angewendet werden.

Wie anhand der Beschreibung zu erkennen ist, bietet die Verfahrensweise gemäß der Erfindung ein einfaches Verfahren für die Unterstützung der Mobilität von externen Knoten, die Daten in oder durch ein Wireless-Mesh-Netz schicken. Dem erfindungsgemäßen Verfahren liegt dabei ein reaktives Routing-Protokoll für das Wireless Mesh-Netz zugrunde, für das Ausführungsbeispiel das Protokoll HWMP aus der IEEE 802.11s Standardisierung. Es wird hierfür auch ein 6-Adressen-Schema wie in der IEEE 802.11s Standardisierung angenommen.

Gezeigt wurde auch, dass die Erfindung das bestehende RERR aus HWMP mit einem Flag "Fehlende Zuordnung" erweitert, das die Interpretation der Adressen im RERR als Zuordnung zwischen externen Knoten und Mesh-Randknoten steuert, so dass es möglich ist, auch Veränderungen bei den Zuordnungen im Wireless-Mesh-Netz bekannt zu machen.

Zu sehen ist auch, dass nur einige wenige Bearbeitungsregeln für bestehende HWMP-Routing-Nachrichten erfindungsgemäß erweitert werden.

Ferner wurde gezeigt, dass eine weitere Verbesserung dadurch erreicht werden kann, dass gemäß der Erfindung eine neue Zuordnungsnachricht entwickelt wurde, die die aktiven Zuordnungen des globalen Teiles der Zuordnungstabelle im Wireless-Mesh-Netz verteilen kann.

Es ist auch zudem ersichtlich geworden, dass die Erfindung Regeln für das Einfügen von Zuordnungen in die Zuordnungstabelle eines Knotens definiert.

Ein großer Vorteil der Erfindung, der somit deutlich geworden ist, ist die Unterstützung der Mobilität von externen Knoten bei sehr geringer Auswirkung auf die bestehenden Mechanismen von HWMP und bei minimalem zusätzlichem Overhead durch die notwendigen Routing-Nachrichten.

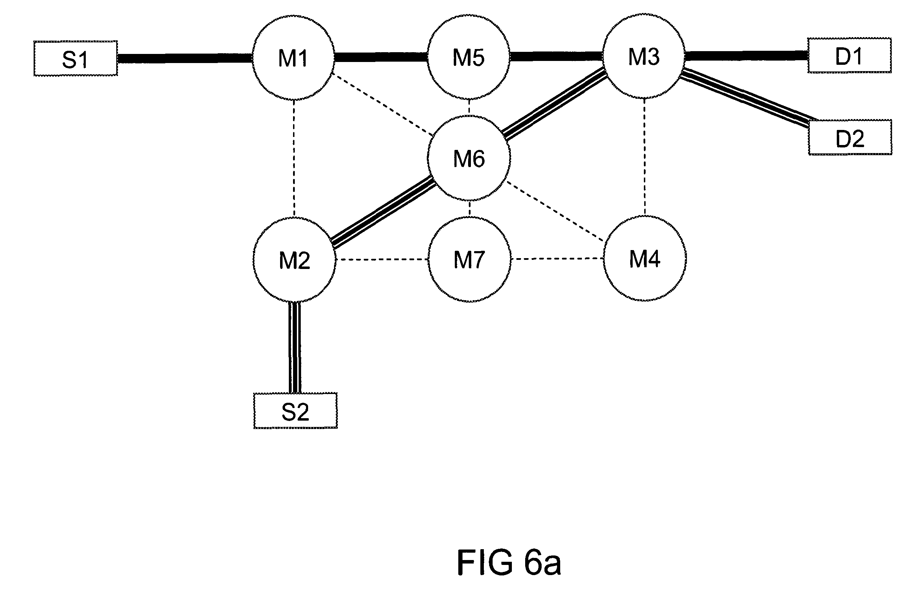

Weitere Vorteile und Aspekte Erfindung werden im Folgenden anhand eines weiteren Ausführungsbeispiels offenbart, dass auf einem in der Figur 6a dargestellen beispielhaften Netz beruht.

Gemäß der Darstellung werden dabei für die folgende Betrachtung ein Szenario bestehend aus:
- Einem ersten externen Quellenknoten S1, einem zweiten externen Quellenknoten S2, einem ersten Senkenknoten D1 sowie einem zweiten Senkenknoten D2
- Einem ersten Mesh-Randknoten M1, einem zweiten Mesh-Randknoten M2, einem dritten Mesh-Randknoten M3 sowie einem vierten Mesh-Randknoten M4.
- Einem ersten Mesh-Zwischenknoten M5, einem zweiten Mesh-Zwischenknoten M6 sowei einem dritten Mesh-Zwischenknoten M7.

Gemäß dem Szenario existieren ferner zwei Kommunikationsflüsse durch das skizzierte Mesh-Netz:
- Ein erster Kommunikationsfluss vom ersten externen Quellknoten S1 zum ersten externen Senkenknoten D1.
- Ein zweiter Kommunikationsfluss vom zweiten externen Qullenknoten S2 zum zweiten externen Senkenknoten D2.

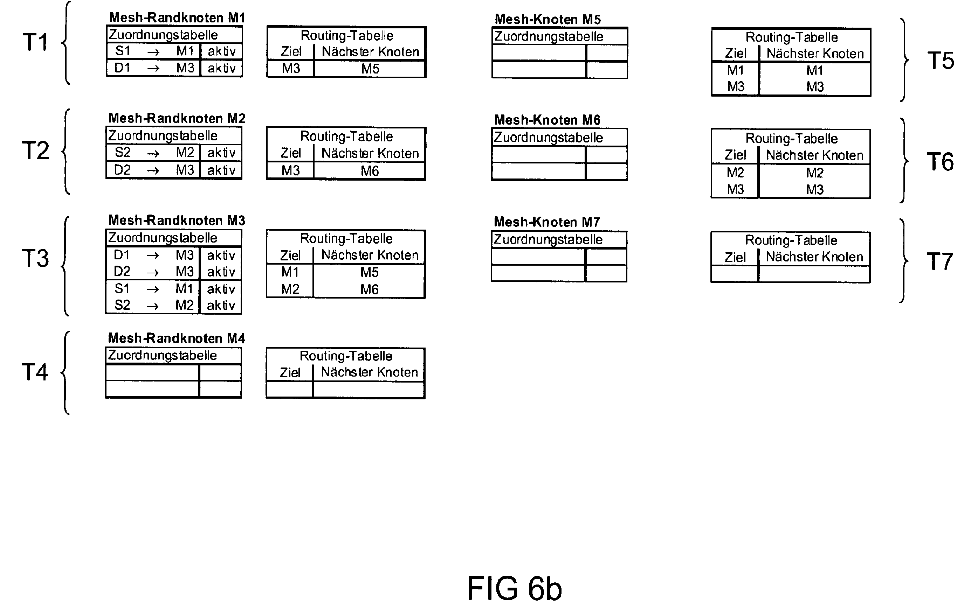

Die sich aus dem Szenario ergebenden entsprechenden RoutingTabellen und Zuordnungstabellen sind in Figur 6b dargestellt. Sie wurden mittels Routing-Nachrichten, die auch das 6-Adress-Schema unterstützen, gefüllt.

Ausgehend von diesem Szenario sei angenommen, dass sich der erste externe Quellknoten S1 sich vom ersten Mesh-Randknoten M1 zum zweiten Mesh-Randknoten M2 bewegt.

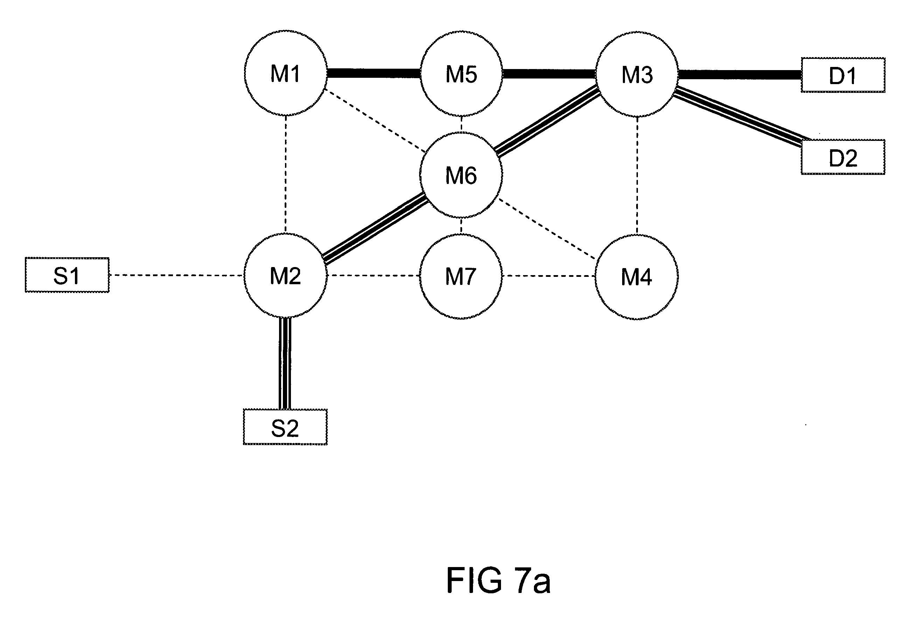

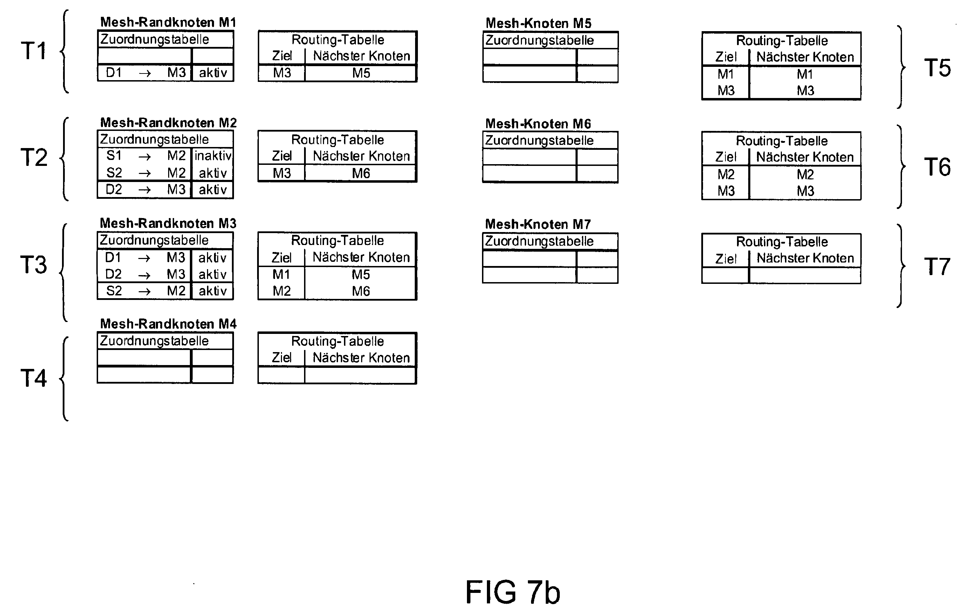

Gemäß dem Ausführungsbeispiel dissoziiert sich dazu der erste externe Quellknoten vom ersten Mesh-Randknoten M1 und assoziiert sich mit dem zweiten Mesh-Randknoten M2. Da die neue Zuordnung in den lokalen Teil der Zuordnungstabelle eingetragen wird, wird sie mit inaktiv initialisiert. Ferner wird, da die alte Zuordnung zwischen dem ersten externen Quellknoten S1 und dem ersten Mesh-Randknoten M1 aktiv war, durch den ersten Mesh-Randknoten M1 entsprechend der Erfindung eine modifizierte Route-Error-Nachricht in das Mesh-Netz geschickt. Das RERR enthält hierbei die Zuordnung "S1-M1". Figur 7a zeigt das sich hierdurch ergebende Netz und in Figur 7b sind die entsprechenden Einträge in den Tabellen der Knoten nach diesen ersten, einen ersten Verfahrensschritt abbildenden Aktionen.

Es folgen erfindungsgemäß weiteren Verfahrensschritte, wie ein zweiter Verfahrensschritt, ein dritter Verfahrensschritt sowie ein vierter Verfahrensschritt, die zum Teil unabhängig voneinander ablaufen, wobei abhängig von den konkreten Zeitpunkten der Einleitung der einzelnen Verfahrensschritte, diese unter Umständen zeitlich parallel zueinander ablaufen. Es kann auch vorkommen, dass ein Schritt wegen der aktuellen Konstellation im Mesh-Netz überhaupt nicht ausgeführt werden muss. Dies kann beispielsweise für den noch zu beschreibenden vierten Verfahrensschritt eintreten.

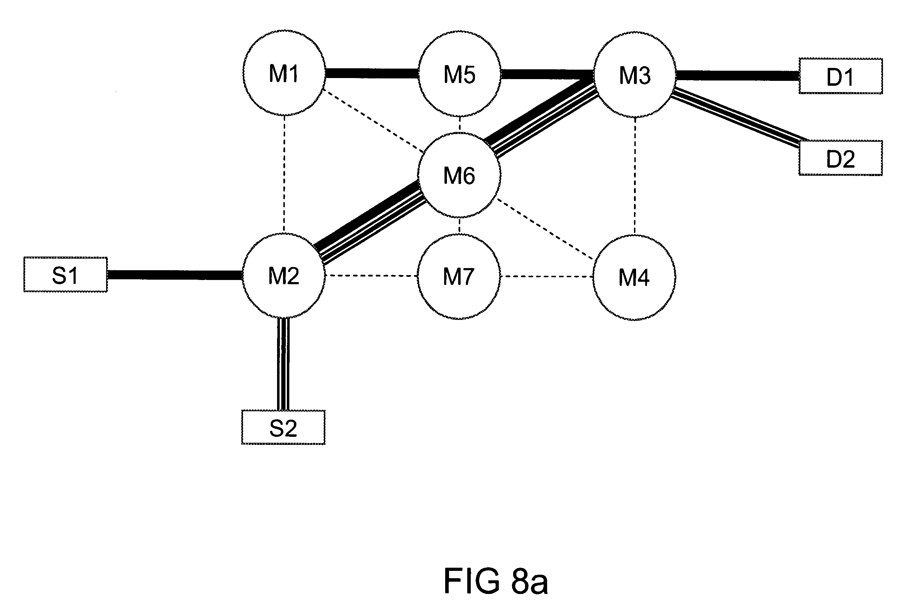

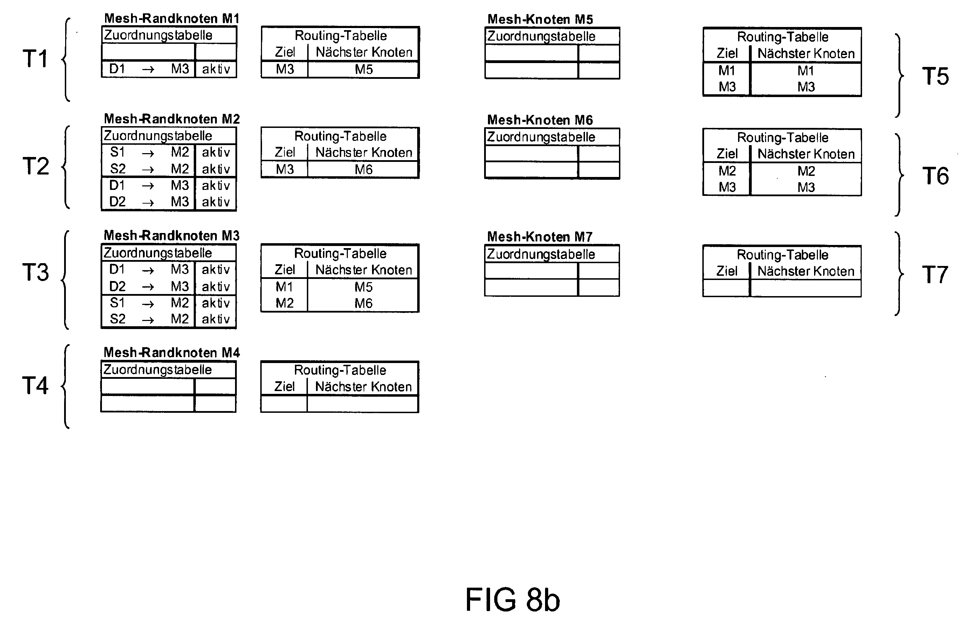

Im Rahmen des zweiten Verfahrensschrittes sendet der erste Quellenknoten S1 Datenpakete an den zweiten Mesh-Randknoten M2, die für den ersten externen Senkenknoten D1 bestimmt sind. Durch die vom ersten externen Quellenknoten S1 erhaltenen Datenpakete wird die Zuordnung S1-M2 auf aktiv gesetzt. Da der zweite Mesh-Rankknoten M2 keine Zuordnung für den ersten externen Senkenknoten D1 in seiner Zuordnungstabelle hat, sendet es ein Route Request aus mit dem ersten externen Senkenknoten D1 als gesuchter Senkenknoten und dem ersten externen Quellenknoten S1 als externen Quellknoten und dem zweiten Mesh-Randknoten M2 als Mesh-Quellknoten. Folgende Zwischenschritte der zweiten Verfahrensschritte sind dabei möglich:
1. Das Destination-Only-Flag ist gesetzt. Der dritte Mesh-Randknoten M3 erhält die Route-Request-Nachricht und lernt daraus die neue Zuordnung für den externen Quellenknoten S1. Der dritte Mesh-Randknoten M3 schickt eine Route-Reply-Nachricht mit sich selbst als Mesh-Senkenknoten und mit dem gesuchten ersten externen Senkenknoten D1 als externen Senkenknoten. Wenn der zweite Mesh-Randknoten M2 diese Route-Reply-Nachricht erhält, lernt er daraus die Zuordnung für den ersten externen Senkenknoten D1. Gleichzeitig wird der Mesh-Pfad zwischen Mesh-Quellknoten und Mesh-Senkenknoten aufgebaut. Im Ausführungsbeispiel existiert er bereits, so dass dieser durch das RREQ/RREP nur aktualisiert wird. Beispielnetz und Zuordnungs- und Routingtabellen nach dem ersten Verfahrensschritt und dem ersten Zwischenschritt des zweiten Verfahrensschritt sind in Figur 8a und Figur 8b dargestellt.
2. Alternativ zum ersten Zwischenschritt kann das Destination-Only-Flag auch nicht gesetzt sein. Der erste Mesh-Randknoten M1 hat eine aktive Zuordnung für den gesuchten ersten externen Senkenknoten D1 und antwortet mit einem RREP entsprechend der Erfindung. In dem RREP stehen der dritte Mesh-Randknoten M3 aus der Zuordnung D1-M3 als Mesh-Senkenknoten und der gesuchte erste externe Senkenknoten D1 als externen Senkenknoten. Die Daten für den Mesh-Pfad zum dritten Mesh-Randknoten M3 werden aus der Routing-Tabelle genommen und entsprechend verknüpft. Wenn der zweite Mesh-Randknoten M2 diese Route-Reply-Nachricht erhält, lernt er daraus die Zuordnung für den ersten externen Senkenknoten D1. Da der Pfad über den zuvor als Mesh-Zugangsknoten genutzten ersten Mesh-Randknoten M1 in diesem Ausführungsbeispiel schlechter ist als der im zweiten Mesh-Randknoten M2 bereits vorhandene Pfad zum dritten Mesh-Randknoten M3 des ersten externen Senkenknotens D1 wird weiterhin der bereits existierende Pfad verwendet. Das RREQ wird vom ersten Mesh-Randknoten M1 entsprechend der Regeln von HWMP und der erfindungsgemäßen Ergänzung weitergeleitet und erreicht den dritten Mesh-Randknoten M3, der dadurch die neue Zuordnung des ersten externen Quellenknotens S1 zum zweiten Mesh-Randknoten M2 lernt. Das ist auch durch RREQs, die über andere Pfade den dritten Mesh-Randknoten M3 erreichen, möglich. Der Mesh-Randknoten M3 antwortet mit einem RREP wie im ersten Zwischenschritt des zweiten Verfahrensschritts. Das sich nach dem ersten Verfahrensschritt und dem zweiten Zwischenschritt im Rahmen des zweiten Verfahrensschritts ergebende Netz ist in Figur 8a zu erkennen. Die sich ergebenden Tabellen und Zuordnungen sind dagegen in Figur 8b dargestellt.

Gemäß dem dritten Verfahrensschritt sendet der zuvor als Zugangsknoten genutzte erste Mesh-Randknoten M1 eine Zuordnungsnachricht. Dabei begrenzt er die Weiterleitung dieser Nachricht auf 2 Hops (TTL = 2). Eingetragen sind gemäß der Erfindung für diesen Fall alle aktiven Zuordnungen aus seiner Zuordnungstabelle, gemäß dem Ausführungsbeispiel ist es nur eine, nämlich die Zuordnung D1-M3. Nach einem Hop erhält der als neuer Zugangsknoten genutzte zweite Mesh-Randknoten M2 diese Zuordnungsnachricht und trägt die darin enthaltene Zuordnung D1-M3 entsprechend der Aktualisierungsregeln dieser Erfindung in den globalen Teil seiner Zuordnungstabelle ein. Da der zweite Mesh-Randknoten M2 bereits einen Mesh-Pfad zum dritten Mesh-Randknoten M3 hat, können jetzt die Datenpakete für den externen ersten Senkenknoten D1 weitergeleitet werden. Die Zuordnung S1-M2 wird im zweiten Mesh-Randknoten M2 auf aktiv gesetzt, sobald die ersten Datenpakete zwischen dem ersten externen Quellknoten S1 und dem zweiten Mesh-Randknoten M2 übertragen werden. Das sich ergebende Beispiel-Mesh-Netz sieht danach, also nach Durchführung des ersten Verfahrensschrittes und des dritten Verfahrensschrittes wie Figur 8a dargestellt aus und hinsichtlich der Zuordnung und Tabellen bis auf einen Unterschied wie in Figur 8b dargestellt aus. Der Unterschied, der sich daraus ergibt, dass der dritte Verfahrensschritt die neue Zuordnung des ersten externen Quellenknotens S1 zum zweiten Mesh-Randknoten M2 nicht dem dritten Mesh-Randknoten M3 mitteilen kann, besteht darin, dass der Eintrag für den ersten externen Quellennoten S1 in der Zuordnungstabelle des dritten Mesh-Randknotens M3 an dieser Stelle nach den dem ersten Verfahrensschritt und dem dritten Verfahrensschritt fehlen würde.

Durch den Erhalt der RERR-Nachricht gemäß dem ersten Verfahrensschritt kennt der dritte Mesh-Randknoten M3 keine Zuordnung für den ersten externen Quellenknoten S1 mehr. Wenn er vom ersten externen Senkenknoten D1 Datenpakete für den ersten externen Quellenknoten S1 bekommt (bidirektionale Kommunikation) muss er aufgrund der fehlenden Zuordnung für den ersten externen Quellenknoten S1 ein Route Request initiieren. Dazu schickt der dritte Mesh-Randknoten M3 ein RREQ in das Mesh-Netz mit dem ersten externen Quellknoten S1 als gesuchtem Senkenknoten und mit dem ersten externen Senkenknoten D1 als externen Quellknoten und dem dritten Mesh-Randknoten M3 als Mesh-Quellknoten. Das Destination-Only-Flag ist gesetzt, so dass nur der als neuer Zugangspunkt fungierende zweite Mesh-Randknoten M2 des ersten externen Quellenknotens S1 mit einer Route-Reply-Nachricht antwortet. Wenn der dritte Mesh-Randknoten M3 das RREP erhält, lernt er dadurch die neue Zuordnung für den ersten externen Quellenknoten S1. Gleichzeitig wird ein Mesh-Pfad zwischen den entsprechenden Mesh-Randknoten aufgebaut. Da im Ausführungsbeispiel dieser bereits exisitiert, wird er nur aktualisiert. Gleichzeitig lernt der als neuer Zugangsknoten genutzte zweite Mesh-Randknoten M2 auch die Zuordnung vom ersten externen Senkenknoten D1 zum dritten Mesh-Randknoten M3. Damit kann die Kommunikation zwischen den ersten externen Quellenknoten S1 und dem ersten externen Senkenknoten D1 fortgesetzt werden. Die Zuordnung S1-M2 wird im zweiten Mesh-Randknoten M2 auf aktiv gesetzt, sobald die ersten Datenpakete zwischen dem ersten externen Quellenknoten S1 und dem zweiten Mesh-Randknoten M2 übertragen werden. Das Beispiel-Mesh-Netz sieht nach diesem Schritt wie in Figur 8a und Zuordnungen und Tabellen gemäß der Darstellung in Figur 8b aus.

Nach Abschluss aller ausgelösten Verfahrensschritte ist Kommunikation zwischen den beiden ersten externen Knoten S1, D1 wieder hergestellt. Das Beispiel-Mesh-Netz sieht am Ende aus wie in Figur 8a und Figur 8b dargestellt.

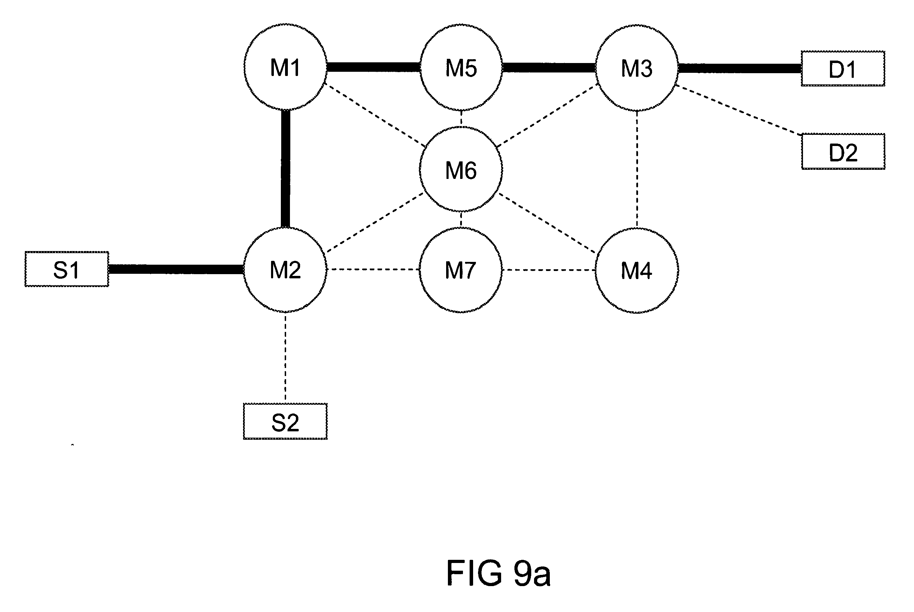

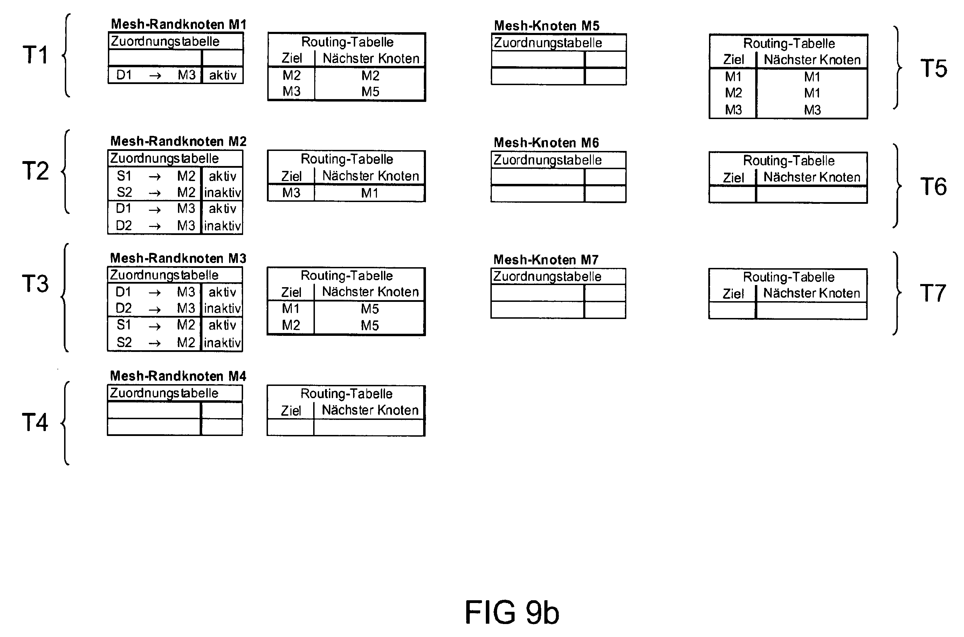

In den Figuren 9a und 9b sei ergänzend noch eine erfindungsgemäße Verfahrensweise angerissen, die sich bei einer (geringfügigen) Variation des zuvor beschriebenen Ausführungsbeispiels ergibt.

Würde nämlich kein Mesh-Pfad zwischen dem zweiten Mesh-Randknoten M2 und dem dritten Mesh-Randknoten M3 bereits existieren und wäre der Pfad zwischen dem zweiten Mesh-Randknoten M2 und dem dritten Mesh-Randknoten M3, der über den ersten Mesh-Randknoten und den fünften Mesh-Knoten M5 verläuft, der beste aller Pfade zwischen dem zweiten Mesh-Randknoten M2 und dem dritten Mesh-Randknoten M3, könnte das Beispiel-Mesh-Netz, nachdem der erste Verfahrensschritt und der zweite Zwischenschritt des zweiten Vefahrensschritts durchgeführt worden sind, wie in Figur 9a und die Zuordnungen und Tabellen in Figur 9b dargestellt aussehen. Das RREQ wird vom ersten Mesh-Randknoten M1 entsprechend der Regeln von HWMP und ihrer Ergänzung durch diese Erfindung weitergeleitet und erreicht den dritten Mesh-Randknoten M3, der dadurch die neue Zuordnung des ersten externen Quellenknotens S1 zum Mesh-Randknoten M2 lernt. Der Mesh-Randknoten M3 antwortet mit einem RREP wie im ersten Zwischenschritt des zweiten Verfahrensschritts.

## Patentansprüche

1. Verfahren zum Betreiben eines nach Art des Mesh, insbesondere gemäß dem Standard IEEE802.11s, aus einer Vielzahl von Netzwerkknoten (MAP, M) gebildeten Netzwerks, welches zumindest einen ersten als Anschlusspunkt für zu dem Netzwerk disjunkte Stationen (STA) funktionierenden ersten Netzwerkknoten (M1) und zumindest einen zweiten als Anschlusspunkt für zu dem Netzwerk disjunkte Stationen (STA) funktionierenden zweiten Netzwerkknotens (M2) betreibt, bei dem bei einem Wechsel einer disjunkten Station (S1) von einem Funkversorgungsbereich des ersten Netzwerkknotens (M1) zum Funkversorgungsbereich des zweiten Netzwerkknotens (M2) in dem Mesh-Netzwerk eine Aktualisierung einer Zuordnungsinformation von Knoten erfolgt auf Grundlage gemäß einer für das Mesh-Netzwerk gültigen Routing-Protokoll definierten Routing-Fehler-Nachricht (RERR),
**dadurch gekennzeichnet, dass**
die Routing-Fehler-Nachricht (RERR) eine Zuordnung zwischen der disjunkten Station (S1) und dem ersten Netzwerkknoten (M1) sowie eine Information, die eine fehlerhafte Zuordnungsinformation signalisiert, umfasst.

2. Verfahren nach dem Anspruch 1, **dadurch gekennzeichnet, dass** die Routing-Fehler-Nachricht (RERR) für das in IEEE 802.11s verwendete 6-Adressen-Schema verwendbar wird.

3. Verfahren nach dem Anspruch 1 oder 2, **dadurch gekennzeichnet, dass** eine Mesh-Netzwerkknoten (MAP, M) zugeordnete Zuordnungstabelle derart strukturiert ist, dass sie in einen ersten Teilbereich und in einen zweiten Teilbereich aufgeteilt ist, wobei der erste Teilbereich für alle Zuordnungen des Mesh-Knotens (M1), dem die Zuordnungstabelle zugeordnet ist, zumindest eine Information, (S1 -> ML) enthält und der zweite Teilbereich für die ihm bekannten Zuordnungen von anderen Mesh-Knoten (M3) des Mesh-Netzwerkes, zumindest die eine Information (D1 -> M3) enthält, und der erste und/oder zweite Teilbereich eine, insbesondere als Tabellenspalte strukturierte Zuordnungseigenschaft aufweist, die eine einen Aktivitätsstatus wiedergebende Information (inaktiv, aktiv) enthält.

4. Verfahren nach einem der vorhergehenden Ansprüche, **dadurch gekennzeichnet, dass** die Information, die eine fehlerhafte Zuordnungsinformation signalisiert, als ein so genanntes Flag ausgestaltet wird, das gesetzt ist.

5. Verfahren nach dem vorhergehenden Anspruch wenn rückbezogen auf Anspruch 3, **dadurch gekennzeichnet, dass** die strukturierte Routing-Fehler-Nachricht (RERR) lediglich Manipulationen des zweiten Tabellenbereichs zugrunde gelegt wird.

6. Verfahren nach einem der vorhergehenden Ansprüche, **dadurch gekennzeichnet, dass** die strukturierte Routing-Fehler-Nachricht (RERR)von allen Mesh-Knoten (M2, M3, M4), die einen Pfad zu einem in der Routing Fehler-Nachricht (RERR) angegebenen als Anschlusspunkt funktionierenden Mesh-Knoten (M1) haben, mittels Broadcast gesendet wird, wobei alle Zuordnungsinformationen zu denen der sendende Mesh-Knoten (M2, M3, M4) keinen Pfad aufweist, vor dem Broadcast aus der strukturierten Routing-Fehler-Nachricht (RERR) gelöscht wird.

7. Verfahren nach einem der Ansprüche 1 bis 5, **dadurch gekennzeichnet, dass** die strukturierte Routing-Fehler-Nachricht (RERR) mittels Unicast von allen Mesh-Knoten (MAP, M) zu allen benachbarten Mesh-Knoten (M, MAP) gesendet wird.

8. Verfahren nach einem der Ansprüche 3 bis 7, **dadurch gekennzeichnet, dass** die Aktivitätsstatusinformation der Zuordnungstabelle des Mesh-Netzwerkknotens (M1) einen Zustand "aktiv" wiedergibt, wenn beim Mesh-Netzwerkknoten, (M1) ein Datenpaket ankommt, welches entweder als Quelle (S1) oder als Senke (D1) einen disjunkten Knoten (STA) signalisiert.

9. Verfahren nach einem der Ansprüche 3 bis 8, **dadurch gekennzeichnet, dass** der Information der Zuordnungen eine insbesondere als Spalte strukturierte Information über eine erste Gültigkeitsdauer beigefügt wird, wobei bei Setzen der Aktivitätsstatusinformation auf einen Zustand "aktiv" der Wert der ersten Gültigkeitsdauer eingetragen wird und wobei bei Ablauf der ersten Gültigkeitsdauer die Aktivitätsstatusinformation auf einen Zustand "inaktiv" gesetzt wird (FIG 7b).

10. Verfahren nach einem der Ansprüche 3 bis 9, **dadurch gekennzeichnet, dass** seitens des verlassenden ersten Netzwerkknotens (M1) eine Nachricht derart strukturiert und mittels Broadcast versendet wird, dass ihr alle als "aktiv" gekennzeichneten Zuordnungsinformationen des zweiten Tabellenbereichs des ersten Netzwerkknotens (M1) beigefügt sind.

11. Verfahren nach dem vorhergehenden Anspruch **dadurch gekennzeichnet, dass** die Anzahl der Weiterleitungen der Nachricht (RERR) zu anderen Knoten (MAP, M), insbesondere durch einen so genannten "Time-to-Live" festgelegt wird.

12. Verfahren nach dem vorhergehenden Anspruch, **dadurch gekennzeichnet, dass** der Wert der Gültigkeitsdauer derart determiniert wird, dass er zu einer Gültigkeitsdauer eines Pfades (M1, M3; M2, M3) korreliert, zu dem die Aktualisierung hinsichtlich der beteiligten Knoten (M1, M2, M3) in Bezug steht.

13. Verfahren nach dem vorhergehenden Anspruch, **dadurch gekennzeichnet, dass** die Determinierung auf Grundlage von pfadbildenden Protokollnachrichten gemäß dem für das Mesh-Netzwerk gültigen Protokoll (HWMP) durchgeführt wird.

14. Verfahren nach einem der Ansprüche 3 bis 13, **dadurch gekennzeichnet, dass** zumindest die Aktivitätsstatusinformation des ersten Tabellenbereichs aufgrund von für die disjunkte Station (S1) vorgeschriebenen Zugangsprozeduren ausgelösten Ereignissen aktualisiert wird.

15. Verfahren nach einem der Ansprüche 3 bis 14, **dadurch gekennzeichnet, dass** zumindest die Aktivitätsinformation des zweiten Tabellenbereichs aufgrund von für das Mesh-Netzwerk vorgeschriebene Prozeduren, insbesondere Routing-Prozeduren, ausgelöste Ereignisse aktualisiert wird.

16. Verfahren nach einem der Ansprüche 3 bis 15, **dadurch gekennzeichnet, dass** seitens eines eine Information über eine bereits im ersten Tabellenbereich enthaltene Zuordnungsinformation (S1 -> M1) erhaltenden Mesh-Netzwerkknoten (MAP, M), die erhaltene Information verworfen wird.

17. Verfahren nach einem der Ansprüche 9 bis 16, **dadurch gekennzeichnet, dass** gemäß für das Mesh-Netzwerk gültigem Routing-Protokoll (HWMP) gebildete Zuordnungsnachrichten derart strukturiert werden, dass sie gezielt mit Werten, insbesondere einer tatsächlich verbleibenden Gültigkeitsdauer der betreffenden Zuordnungsinformation, für die Determinierung der ersten Gültigkeitsdauer belegt werden können.

18. Verfahren nach einem der vorhergehenden Ansprüche, **dadurch gekennzeichnet, dass** nach Wechsel der Station (S1) bei Kommunikationsversuch der Station über das Mesh-Netzwerk seitens des zweiten Netzwerkknotens (M2) eine gemäß einem für das Mesh-Netzwerk gültigen Routing-Protokoll definierte Routing-Anforderungsnachricht (RREQ) versandt wird, die derart manipuliert wird, dass ein Setzen des so genannten Destination-Only Flags in der Nachricht (RREQ) unterbleibt.

## Claims

1. A method for operating a network which is formed by a plurality of network nodes (MAP, M) in the manner of a mesh, in particular according to standard IEEE802.11s, and which operates at least a first network node (M1) that functions as a connection point for stations (STA) which are disjunct from the network and at least a second network node (M2) which functions as an access point for stations (STA) which are disjunct from the network, in which, when a disjunct station (S1) switches from a cluster of the first network node (M1) to the cluster of the second network node (M2), an updating of a node assignment information is carried out on the basis of a routing error message (RERR) according to a routing protocol that is valid for the mesh network
**characterised in that**
the routing error message (RERR) comprises an assignment between the disjunct station (S1) and the first network node (M1) as well as an information which signals an incorrect assignment information.

2. The method of claim 1 wherein the routing error message (RERR) can be used for the 6-address scheme used in IEEE 802.11s.

3. The method of claim 1 or 2 wherein an assignment table assigned to mesh network nodes (MAP, M) is structured such that it is divided into a first part-range and a second part-range, with the first part-range containing at least one information (S1 -> M1) for all assignments of the mesh node (M1) to which the assignment table is assigned, and the second part-range containing at least the one information (D1 -> M3) for the assignments known to it of other mesh nodes (M3) of the mesh network, and with the first and/or second part-range exhibiting an assignment characteristic that is structured in particular as a table column and that contains an information reproducing an activity status (inactive, active).

4. The method of any one of the preceding claims wherein the information that signals an incorrect assignment information is configured as a so-called flag which is set.

5. The method of the preceding claim when referred back to claim 3, wherein the structured routing error message (RERR) is based solely on manipulations of the second table range.

6. The method of any one of the preceding claims wherein the structured routing error message (RERR) is transmitted by way of broadcast by all mesh nodes (M2, M3, M4) which exhibit a path to a mesh node (M1) given in the routing error message (RERR) and functioning as a connection point, with all assignment information to which the transmitting mesh node (M2, M3, M4) does not exhibit a path being deleted from the structured routing error message (RERR) before the broadcast.

7. The method of any one of claims 1 to 5 wherein the structured routing error message (RERR) is transmitted by all mesh nodes (MAP, M) to all neighbouring mesh nodes (M, MAP) by unicast.

8. The method of any one of claims 3 to 7 wherein the activity status information of the assignment table of the mesh network node (M1) returns an "active" status when the mesh network node (M1) receives a data packet which - either as source (S1) or as a sink (D1) - signals a disjunct node (STA).

9. The method of any one of claims 3 to 8 wherein information structured in particular as a column and relating to a first validity period is appended to the information about the assignments, and when the activity status information is set to an "active" status, the value of the first validity period is entered and when the first validity period elapses the activity status information is set to an "inactive" status (FIG 7b).

10. The method of any one of claims 3 to 9 wherein the transmitting first network node (M1) structures and transmits a message by way of broadcast in such a way that all assignment information of the second table range of the first network node (M1) designated as "active" is appended to it.

11. The method of any one of the preceding claims wherein the number of forwardings of the message (RERR) to other nodes (MAP, M) is limited, in particular by a so-called "Time-to-live".

12. The method of any one of the preceding claims wherein the value of the validity period is determined such that it correlates to a validity period of a path (M1, M3; M2, M3) to which the updating of the participating nodes (M1, M2, W3) relates.

13. The method of any one of the preceding claims wherein the determining is carried out on the basis of path-forming protocol messages according to the protocol (HWMP) valid for the mesh network.

14. The method of any one of claims 3 to 13 wherein at least the activity status information of the first table range is updated on the basis of events initiated by access procedures prescribed for the disjunct station (S1).

15. The method of any one of claims 3 to 14 wherein at least the activity information of the second table range is updated on the basis of events initiated by procedures, prescribed for the mesh network, in particular routing procedures.

16. The method of any one of claims 3 to 15 wherein a mesh network mode (MAP, M) receiving information about an assignment information (S1 -> M1) already contained in the first table range rejects the received information.

17. The method of any one of claims 9 to 16 wherein assignment messages formed according to the routing protocol (HWMP) valid for the mesh network are structured such that they can be assigned values selectively, in particular an actually remaining validity period of the assignment information concerned, for the determining of the first validity period.

18. The method of any one of the preceding claims wherein, following a change of station (S1), when the station attempts communication over the mesh network, the second network node (M2) sends a routing request message (RREQ) defined according to a routing protocol valid for the mesh network and manipulated in such a way that a setting of the so-called destination-only flag in the message (RREQ) is omitted.

## Revendications

1. Procédé servant à faire fonctionner un réseau de type maillé, en particulier selon la norme IEEE802.11s, constitué d'une pluralité de noeuds de réseau (MAP, M), lequel réseau opère au moins un premier noeud de réseau (M1) fonctionnant en tant que point de connexion pour des stations (STA) disjointes du réseau et au moins un deuxième noeud de réseau (M2) fonctionnant comme point de connexion pour des stations (STA) disjointes du réseau, dans le cadre duquel procédé, dans le cas d'un changement d'une station (S1) disjointe d'une zone de couverture radio du premier noeud de réseau (M1) vers la zone de couverture radio du deuxième noeud de réseau (M2), une mise à jour d'une information d'affectation des noeuds est effectuée dans le réseau maillé sur la base d'un message d'erreur de routage (RERR) défini selon un protocole de routage valide pour le réseau maillé,
**caractérisé en ce que**
le message d'erreur de routage (RERR) comporte une affectation entre la station (S1) disjointe et le premier noeud de réseau (M1) ainsi qu'une information signalisant une information d'affectation erronée.

2. Procédé selon la revendication 1, **caractérisé en ce que** le message d'erreur de routage (RERR) peut être utilisé pour le schéma à 6 adresses utilisé dans la norme IEEE 802.11s.

3. Procédé selon la revendication 1 ou 2, **caractérisé en ce qu'**une table d'affectation affectée aux noeuds de réseau maillé (MAP, M) présente une structure telle qu'elle est divisée en une première partie partielle et en une deuxième partie partielle, sachant que la première partie partielle contient pour toutes les affectations du noeud maillé (M1), auquel est affectée la table d'affectation, au moins une information (S1 -> M1) et sachant que la deuxième partie partielle contient pour les affectations, qui lui sont connues, d'autres noeuds maillés (M3) du réseau maillé, au moins une information (D1 -> M3), et sachant que la première partie partielle et/ou la deuxième partie partielle présentent une caractéristique d'affectation structurée en particulier sous la forme d'une colonne de table, laquelle caractéristique d'affectation contient une information (inactif, actif) reproduisant un statut d'activité.

4. Procédé selon l'une quelconque des revendications précédentes, **caractérisé en ce que** l'information signalisant une information d'affectation erronée est configurée sous la forme de ce qu'on appelle un drapeau qui est placé.

5. Procédé selon la revendication précédente, si elle renvoie à la revendication 3, **caractérisé en ce que** le message d'erreur de routage (RERR) structuré sert de base uniquement aux manipulations de la deuxième partie de la table.

6. Procédé selon l'une quelconque des revendications précédentes, **caractérisé en ce que** le message d'erreur de routage (RERR) structuré est envoyé par diffusion par tous les noeuds maillés (M2, M3, M4), qui ont un chemin d'accès vers un noeud maillé (M1) fonctionnant comme point de connexion indiqué dans le message d'erreur de routage (RERR), sachant que toutes les informations d'affectation, auxquelles le noeud maillé (M2, M3, M4) émetteur n'a pas accès, sont supprimées du message d'erreur de routage (RERR) structuré avant la diffusion.

7. Procédé selon l'une quelconque des revendications 1 à 5, **caractérisé en ce que** le message d'erreur de routage (RERR) structuré est envoyé au moyen d'une unidiffusion par tous les noeuds maillés (MAP, M) à tous les noeuds maillés (M, MAP) voisins.

8. Procédé selon l'une quelconque des revendications 3 à 7, **caractérisé en ce que** l'information relative au statut d'activité de la table d'affectation du noeud de réseau maillé (M1) reproduit un état « actif » en cas d'arrivée dans le noeud de réseau maillé (M1) d'un paquet de données, qui signale un noeud disjoint (STA) soit comme source (S1) soit comme collecteur de messages (D1).

9. Procédé selon l'une quelconque des revendications 3 à 8, **caractérisé en ce qu'**une information structurée en particulier sous la forme d'une colonne et concernant une première durée de validité est ajoutée à l'information des affectations, sachant que lorsque l'information de statut d'activité est placée sur un état « actif », la valeur de la première durée de validité est enregistrée et sachant qu'à l'issue de la première durée de validité, l'information de statut d'activité est placée sur un état « inactif » (fig. 7b).

10. Procédé selon l'une quelconque des revendications 3 à 9, **caractérisé en ce que** du côté du premier noeud de réseau (M1) quitté, un message est structuré et envoyé par diffusion de telle manière que toutes les informations d'affectation identifiées comme « actives » de la deuxième partie de la table du premier noeud de réseau (M1) sont ajoutées audit message.

11. Procédé selon la revendication précédente, **caractérisé en ce que** le nombre des transferts du message (RERR) à d'autres noeuds (MAP, M) est déterminé en particulier par ce qu'on appelle une valeur TTL « Time-to-Live ».

12. Procédé selon la revendication précédente, **caractérisé en ce que** la valeur de la durée de validité est déterminée de telle manière qu'elle est corrélée avec une durée de validité d'un chemin d'accès (M1, M3 ; M2, M3), auquel la mise à jour relative aux noeuds concernés (M1, M2, M3) fait référence.

13. Procédé selon la revendication précédente, **caractérisé en ce que** la détermination est effectuée sur la base de messages de protocole formant des chemins d'accès selon le protocole (HWMP) valable pour le réseau maillé.

14. Procédé selon l'une quelconque des revendications 3 à 13, **caractérisé en ce qu'**au moins l'information de statut d'activité de la première partie de la table est mise à jour sur la base d'événements déclenchés par des procédures d'accès prescrites pour la station disjointe (S1).

15. Procédé selon l'une quelconque des revendications 3 à 14, **caractérisé en ce qu'**au moins l'information d'activité de la deuxième partie de la table est mise à jour sur la base d'événements, déclenchés par des procédures, en particulier par des procédures de routage, prescrites pour le réseau maillé.

16. Procédé selon l'une quelconque des revendications 3 à 15, **caractérisé en ce que** l'information reçue est rejetée du coté d'un noeud de réseau maillé (MAP, M) recevant une information concernant une information d'affectation (S1 -> M1) déjà contenue dans la première partie de la table.

17. Procédé selon l'une quelconque des revendications 9 à 16, **caractérisé en ce que** des messages d'affectation formés selon le protocole de routage (HWMP) valable pour le réseau maillé présentent une structure telle qu'ils peuvent prendre de manière ciblée des valeurs, en particulier une durée de validité restante effectivement de l'information d'affectation concernée, pour la détermination de la première durée de validité.

18. Procédé selon l'une quelconque des revendications précédentes, **caractérisé en ce qu'**après le changement de la station (S1) en cas de tentative de communication de la station par l'intermédiaire du réseau maillé du côté du deuxième noeud de réseau (M2), un message de requête de routage (RREQ) défini selon un protocole de routage valable pour le réseau maillé est envoyé, lequel message de requête de routage est manipulé de telle manière que le message (RREQ) n'est pas marqué par ce qu'on appelle un drapeau de destination unique (Destination-Only Flag).
